# FASCICULE DE BREVET EUROPEEN

(11) **EP 4 502 402 B1**
(45) Date de publication et mention de la délivrance du brevet: **16.09.2026**
(21) Numéro de dépôt: 24190535.5
(22) Date de dépôt: 24.07.2024
(51) Int. Cl.: F16B 21/16, B64G 1/64, F16B 19/10, B64D 1/02

(54) **DISPOSITIF DE LIAISON SÉPARABLE, EN PARTICULIER POUR UN ENGIN VOLANT ET/OU SPATIAL**
TRENNBARE VERBINDUNGSVORRICHTUNG, INSBESONDERE FÜR EIN FLUGGERÄT UND/ODER RAUMFAHRZEUG
SEPARABLE LINKING DEVICE, IN PARTICULAR FOR A FLYING AND/OR SPACECRAFT

(30) Priorité: 04.08.2023 FR 2308356
(43) Date de publication de la demande: 05.02.2025
(73) Titulaire: MBDA France, 92350 Le Plessis-Robinson (FR)
(72) Inventeur: MANCHON, François, 92350 Le Plessis-Robinson (FR)
(74) Mandataire: Gevers & Orès

(56) Documents cités:
- WO-A2-2019/014293
- GB-A- 971 537

## Description

### Domaine technique

La présente invention concerne un dispositif et un procédé de liaison séparable de deux pièces, en particulier pour un engin volant et/ou spatial tel qu'un aéronef, un drone, une fusée ou un missile par exemple.

### Etat de la technique

Dans des domaines variés, notamment dans le secteur de l'aéronautique, de l'aérospatial et de la défense, il est particulièrement intéressant de pouvoir lier plusieurs sous-ensembles les uns aux autres et de pouvoir les séparer à un moment souhaité. Par exemple, des aéronefs, des fusées ou encore des satellites peuvent comporter une structure principale à laquelle sont liés des sous-ensembles comme des boosters, des étages, ou des systèmes d'armes (missiles, bombes, ...). Selon leur utilisation, ces sous-ensembles doivent pouvoir être détachés et éventuellement éjectés de la structure principale à des instants particuliers.

On connaît des dispositifs usuels permettant de réaliser des liaisons séparables entre deux pièces comme des broches, des écrous séparables ou explosifs, des vérins ou encore des rétracteurs. Les dispositifs de type broche ou écrou permettent d'assurer le verrouillage d'un assemblage et, sous l'action d'un actionneur, de libérer les pièces dudit assemblage en supprimant la liaison qui les verrouillait ensemble. Cette liaison peut être supprimée par le déplacement d'éléments particuliers ou par une action pyrotechnique comme une explosion d'un écrou ou d'une broche. Les dispositifs de type vérin ou rétracteur assurent, généralement, une simple fonction de verrouillage/déverrouillage, en empêchant ou non deux pièces de se séparer à l'aide d'une tige rétractable.

On connaît, également, des dispositifs permettant de précontraindre des éléments ensemble afin d'éviter leur séparation sous des environnements connus, par exemple des éléments soumis à des vibrations ou à des sollicitations mécaniques.

En outre, par le document GB-971537, on connaît des éléments de liaison à séparation rapide.

Aucune des solutions connues citées ci-dessus ne permet d'assurer, à la fois une fonction de verrouillage/déverrouillage de deux pièces et une fonction de séparation éloignant lesdites pièces l'une de l'autre lorsqu'elles sont déverrouillées. Par ailleurs, ces solutions ne permettent pas non plus de verrouiller deux pièces ensemble en assurant un maintien desdites pièces sous précontrainte.

Les dispositifs connus ne sont donc pas complètement satisfaisants.

### Exposé de l'invention

La présente invention a pour objet de proposer un dispositif permettant de remédier aux inconvénients précités des dispositifs existants. Elle concerne un dispositif de liaison séparable de deux pièces, selon la revendication 1. Ledit dispositif de liaison comprend une broche de liaison configurée pour pouvoir être agencée, au moins partiellement, dans une première cavité d'une première desdites pièces et dans une seconde cavité de la seconde desdites pièces, ladite broche de liaison étant apte à maintenir solidairement lesdites pièces ensemble et à les séparer.

Selon l'invention, le dispositif de liaison comporte un plongeur mobile agencé dans la broche de liaison et un générateur de pression apte à être commandé et configuré pour générer une pression, ledit dispositif de liaison étant configuré pour pouvoir prendre successivement les configurations suivantes :
- une configuration dite verrouillée, dans laquelle le plongeur, maintenu par un élément élastique, agit sur des éléments de verrouillage qui verrouillent la broche de liaison entre les deux pièces, ladite broche de liaison étant configurée pour exercer un effort prédéterminé sur lesdites pièces en les plaquant l'une contre l'autre lorsqu'elle est verrouillée par les éléments de verrouillage ;
- une configuration dite déverrouillée, dans laquelle le plongeur, déplacé par une pression générée par le générateur de pression dans une première chambre, libère les éléments de verrouillage de manière à déverrouiller la broche de liaison et à libérer les deux pièces de l'effort prédéterminé exercé par ladite broche de liaison ; et
- une configuration dite de séparation, dans laquelle le plongeur, déplacé par la pression générée par le générateur de pression dans la première chambre, ouvre au moins un passage fluidique entre ladite première chambre et une seconde chambre de manière à permettre au fluide dans la première chambre de passer dans la seconde chambre et d'y transférer la pression générée par le générateur de pression, la broche de liaison étant déplacée par ladite pression dans la seconde chambre jusqu'à venir générer un choc sur une butée agencée sur l'une desdites pièces de manière à initier la séparation des deux pièces.

Ainsi, grâce à l'invention, on est en mesure d'obtenir un dispositif simple, compact et léger permettant d'assurer le verrouillage de deux pièces l'une contre l'autre sous précontrainte et, sur commande du générateur de pression, le déverrouillage desdites pièces en les séparant. Le déverrouillage et la séparation sont réalisés à partir d'un même fluide mis sous pression par un seul générateur de pression. Une pression est générée dans la première chambre pour déverrouiller la broche de liaison, puis elle est transférée dans la seconde chambre pour propulser ladite broche de liaison contre la butée. A partir d'un dispositif de liaison unique, on est donc capable d'assurer une liaison solidaire des deux pièces entre elles et, lorsqu'on le souhaite, d'assurer une désolidarisation et une séparation desdites pièces.

Avantageusement, le dispositif de liaison comporte :
- dans la première cavité, une gorge apte à recevoir les éléments de verrouillage, lesdits éléments de verrouillage étant maintenus dans ladite gorge par une tête du plongeur, dans la configuration verrouillée, de manière à verrouiller la broche de liaison longitudinalement dans un premier sens ; et
- dans la seconde cavité, un épaulement apte à recevoir au moins une partie de la broche de liaison en appui, ladite broche de liaison étant maintenue contre ledit épaulement, dans la configuration verrouillée, de manière à verrouiller la broche de liaison longitudinalement dans un second sens, opposé au premier sens.

En outre, de façon avantageuse, la seconde cavité de la seconde pièce comprend la seconde chambre, ladite seconde chambre correspondant à un espace libre ménagé entre une paroi externe de la broche de liaison et une paroi interne de la cavité.

Ainsi, grâce à l'agencement décrit ci-dessus, on est capable d'obtenir une interface simple entre les deux pièces avec un dispositif de liaison qui occupe un espace restreint. Le dispositif de liaison est donc simple à mettre en place et peu encombrant.

De plus, avantageusement, le dispositif de liaison comporte au moins une vis de serrage apte à être vissée dans la broche de liaison et à venir en appui sur la seconde pièce, dans la configuration verrouillée, de manière à obtenir l'effort prédéterminé plaquant la première pièce et la seconde pièce l'une contre l'autre, le serrage de la vis de serrage permettant de régler ledit effort prédéterminé.

Ainsi, grâce à ce mode de réalisation particulier, on est capable de régler de manière simple et rapide l'effort prédéterminé (ou effort de précontrainte) avec lequel on souhaite plaquer les deux pièces l'une contre l'autre.

Dans un mode de réalisation particulier, le dispositif de liaison comporte un écrou configuré pour être vissé sur un filetage d'un prolongement de la broche de liaison en étant en appui contre la pièce, dans la configuration verrouillée, de manière à obtenir l'effort prédéterminé plaquant la première pièce et la seconde pièce l'une contre l'autre, le serrage de l'écrou permettant de régler ledit effort prédéterminé.

Dans un mode de réalisation particulier, la gorge comporte une pente et le plongeur comporte une surface inclinée, ladite pente et ladite surface inclinée étant configurées de sorte que, dans la configuration verrouillée, le plongeur agit sur les éléments de verrouillage, sous l'action d'un effort élastique exercé par l'élément élastique, de manière à maintenir lesdits éléments de verrouillage dans la gorge tout en transmettant ledit effort élastique à l'une des deux pièces, via ladite surface inclinée et ladite pente, de manière à plaquer lesdites pièces l'une contre l'autre avec l'effort prédéterminé, les caractéristiques de l'élément élastique permettant de définir ledit effort prédéterminé.

Ainsi, grâce à ce mode de réalisation particulier, on est en mesure d'obtenir un dispositif de liaison dont l'élément élastique assure, dans la configuration verrouillée, à la fois le verrouillage de la broche de liaison et le plaquage des deux pièces l'une contre l'autre.

Par ailleurs, dans un premier mode de réalisation particulier, le ou les passages fluidiques entre la première chambre et la seconde chambre sont agencés de sorte que, lors du déplacement du plongeur sous l'effet de la pression générée par le générateur de pression, ledit plongeur ouvre lesdits passages fluidiques sensiblement en même temps qu'il libère les éléments de verrouillage.

Dans un deuxième mode de réalisation, le ou les passages fluidiques entre la première chambre et la seconde chambre sont agencés de sorte que, lors du déplacement du plongeur sous l'effet de la pression générée par le générateur de pression, ledit plongeur ouvre lesdits passages fluidiques après qu'il a libéré les éléments de verrouillage.

Ainsi, la pression est distribuée dans la seconde chambre après que la broche de liaison a été déverrouillée. On obtient alors une rétractation de de la broche de liaison qui est modérément puissante et qui génère un choc modéré sur la butée. Cela permet de donner une impulsion relativement douce à l'une des deux pièces pour les séparer sans risquer d'endommager des éléments de l'une ou l'autre desdites pièces.

En outre, dans un troisième mode de réalisation particulier, le ou les passages fluidiques entre la première chambre et la seconde chambre sont agencés de sorte que, lors du déplacement du plongeur sous l'effet de la pression générée par le générateur de pression, ledit plongeur ouvre lesdits passages fluidiques avant qu'il ait libéré les éléments de verrouillage.

Ainsi, la pression est distribuée dans la seconde chambre lorsque la broche de liaison est encore verrouillée. Cette pression peut donc augmenter jusqu'au déverrouillage de la broche de liaison. Lors de ce déverrouillage, on obtient alors une rétractation puissante et rapide de de la broche de liaison qui génère un choc brutal sur la butée. Cela permet de donner une impulsion plus importante à l'une des deux pièces pour les séparer de manière franche.

Grâce aux trois modes de réalisation ci-dessus, on dispose de variantes permettant d'obtenir une séparation des pièces plus ou moins marquée et puissante. Il est donc possible de choisir un type de séparation adapté en fonction de l'application considérée.

Dans le cadre de la présente invention, les éléments de verrouillage peuvent être réalisés de différentes manières.

Dans un premier mode de réalisation, les éléments de verrouillage correspondent à des billes et, dans la configuration verrouillée, le dispositif de liaison est configuré pour obtenir un contact ponctuel entre lesdites billes et l'une des première et seconde pièces apte à verrouiller la broche de liaison.

Dans un deuxième mode de réalisation, les éléments de verrouillage correspondent à l'un des éléments suivants, des rouleaux ou des tonneaux ; et, dans la configuration verrouillée, le dispositif de liaison est configuré pour obtenir un contact linéique entre lesdits éléments de verrouillage et l'une des première et seconde pièces apte à verrouiller la broche de liaison.

En outre, dans un troisième mode de réalisation, les éléments de verrouillage correspondent à l'un des éléments suivants, des coins ou des clavettes ; et, dans la configuration verrouillée, le dispositif de liaison est configuré pour obtenir un contact surfacique entre lesdits éléments de verrouillage et l'une des première et seconde pièces apte à verrouiller la broche de liaison.

Ainsi, grâce aux trois modes de réalisation ci-dessus, on dispose de variantes permettant d'obtenir un verrouillage de la broche de liaison avec différentes surfaces de contact. En fonction de la surface de contact, il est possible d'obtenir une force de verrouillage maximale plus ou moins élevée. Il est donc possible de choisir un type de verrouillage adapté en fonction de l'application considéré.

Par ailleurs, de façon avantageuse, le générateur de pression correspond à l'un des systèmes générateurs de fluide suivants : une cartouche pyrotechnique génératrice de gaz, une cartouche génératrice de fluide, un système pneumatique, un système hydraulique.

En outre, avantageusement, au moins l'une des première et seconde pièces comporte un bouchon mobile configuré pour fermer, dans la configuration de séparation, une embouchure de la première cavité ou de la seconde cavité, ledit bouchon comprenant une face pourvue d'une forme aérodynamique apte à épouser une surface externe de la première pièce ou de la seconde pièce.

Ainsi, le dispositif de liaison permet d'éviter que l'une ou l'autre des deux pièces ne présente une cavité ouverte après leur séparation. Cela permet, notamment, d'éviter des effets de traînée dans le cas d'un engin volant.

Dans un mode de réalisation préféré, la broche de liaison est entièrement rétractée à l'intérieur de l'une ou l'autre de la première cavité et de la seconde cavité dans la configuration de séparation.

Ainsi, le dispositif de liaison permet d'éviter qu'après la séparation des pièces, la broche de liaison ne dépasse à l'extérieur de l'une ou l'autre desdites pièces. De cette façon, elle n'est pas susceptible d'entrer en contact avec des éléments extérieurs. Cela permet, également, d'éviter des effets de traînée dans le cas d'un engin volant.

La présente invention concerne, également, un engin volant et/ou spatial ou un objet largable comprenant au moins deux pièces. Selon l'invention, ledit engin volant et/ou spatial ou l'objet largable comporte au moins un dispositif de liaison tel que décrit ci-dessus pour lier lesdites pièces. Dans un mode de réalisation particulier, il comporte une pluralité de tels dispositifs de liaison.

La présente invention concerne, également, un procédé de séparation de deux pièces liées ensemble à l'aide d'au moins un dispositif de liaison (tel que décrit ci-dessus). Selon l'invention, à partir d'une configuration verrouillée dans laquelle les deux pièces sont solidairement liées ensemble par le dispositif de liaison, ledit procédé comprend, pour séparer les deux pièces, au moins la suite d'étapes suivantes mises en œuvre successivement :
- une étape de déverrouillage consistant à commander le générateur de pression pour qu'il génère une pression dans la première chambre de manière à déplacer le plongeur afin de libérer les éléments de verrouillage pour déverrouiller la broche de liaison et libérer les deux pièces de l'effort prédéterminé ; et
- une étape de séparation, mise en œuvre après l'étape de déverrouillage, dans laquelle le plongeur, déplacé par la pression générée par le générateur de pression, ouvre le ou les passages fluidiques entre la première chambre et la seconde chambre, de manière à permettre au fluide dans la première chambre de passer dans la seconde chambre et d'y transférer la pression générée par le générateur de pression pour déplacer la broche de liaison jusqu'à ce qu'elle vienne générer un choc sur une butée agencée sur l'une des deux pièces pour initier la séparation desdites deux pièces.

### Brève description des figures

Les figures annexées feront bien comprendre comment l'invention peut être réalisée. Sur ces figures, des références identiques désignent des éléments semblables.
La figure 1 est une vue en coupe d'un mode de réalisation préféré d'un dispositif de liaison dans une configuration verrouillée.
La figure 2 est une vue en coupe du dispositif de liaison de la figure 1 dans une configuration déverrouillée.
La figure 3 est une vue du dispositif de liaison de la figure 1 dans une configuration intermédiaire entre la configuration déverrouillée et une configuration de séparation.
La figure 4 est une vue en coupe du dispositif de liaison de la figure 1, dans la configuration de séparation.
La figure 5 est une vue en coupe d'un premier mode de réalisation particulier du dispositif de liaison dans la configuration verrouillée.
La figure 6 est une vue en coupe d'un deuxième mode de réalisation particulier du dispositif de liaison dans la configuration verrouillée.
La figure 7 est une vue en coupe d'un troisième mode de réalisation particulier du dispositif de liaison dans la configuration verrouillée.

### Description détaillée

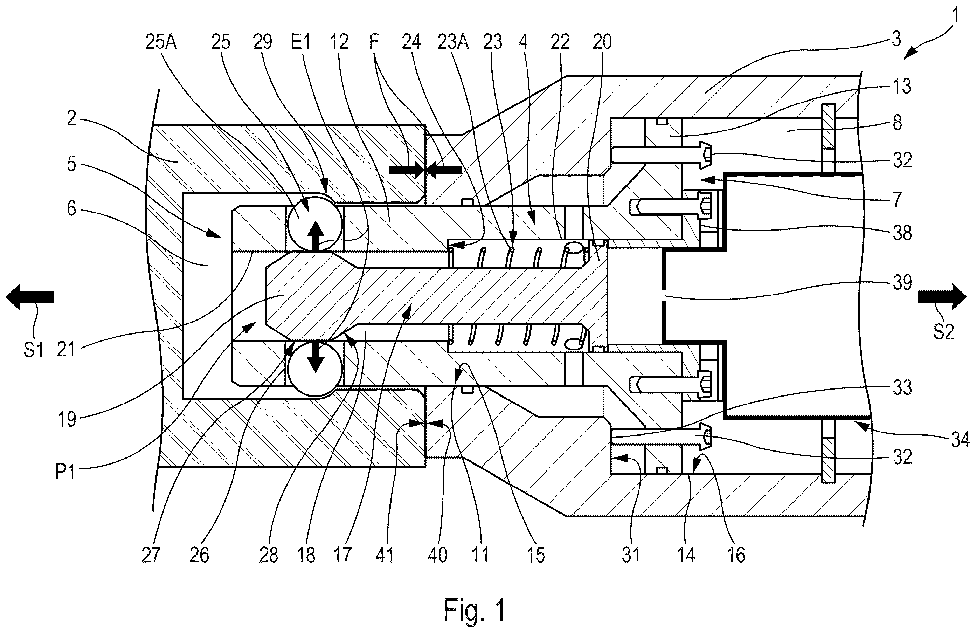

Le dispositif de liaison séparable 1 (ci-après dispositif 1) permettant d'illustrer l'invention est représenté dans des modes de réalisation particuliers de la figure 1 à la figure 5. Ce dispositif 1 est destiné à lier solidairement au moins deux pièces ensemble. Dans le cadre de la présente invention, le terme « pièce » peut faire référence à des éléments uniques ou à des sous-ensembles comprenant plusieurs éléments. Par exemple, le dispositif 1 peut être adapté pour attacher un simple élément sur un support ou pour solidariser un sous-ensemble plus complexe à une structure principale.

De plus, le dispositif 1 est destiné à permettre, lorsqu'on le souhaite, la désolidarisation et la séparation des deux pièces. Il permet donc non seulement de libérer les deux pièces des interactions qui les maintiennent ensemble, mais également de les éloigner l'une de l'autre après la désolidarisation.

Bien que non exclusivement, le dispositif 1 est particulièrement adapté à des applications dans les domaines de l'aéronautique, de l'aérospatial et de la défense. Des exemples faisant bien comprendre les applications possibles pour le dispositif 1 seront présentés dans la suite de la présente description.

Un premier mode de réalisation du dispositif 1, représenté de la figure 1 à la figure 4, est décrit en détail ci-dessous. Il s'agit d'un mode de réalisation préféré. Toutefois la présente invention n'est pas limitée à ce premier mode de réalisation et pourra être réalisée de manières variées. Des exemples d'autres modes de réalisation particuliers seront détaillés par la suite.

Dans le mode de réalisation représenté de la figure 1 à la figure 4, le dispositif 1 est configuré pour pouvoir lier solidairement une pièce 2 et une pièce 3 ensemble et pour pouvoir les séparer à un moment souhaité.

Dans un exemple particulier, la pièce 2 fait partie d'un ensemble principal, à savoir un ensemble que l'on souhaite conserver après la séparation des pièces 2 et 3. Quant à la pièce 3, elle fait partie d'un ensemble secondaire, à savoir un ensemble dont on souhaite se séparer à un instant particulier. En variante, les rôles des pièces 2 et 3 peuvent être inversés.

Comme représenté de la figure 1 à la figure 4, la dispositif 1 comporte une broche de liaison 4 configurée pour pouvoir être agencée, au moins partiellement, dans les pièces 2 et 3.

Plus particulièrement, la broche de liaison 4 comprend une extrémité 5 configurée pour pouvoir être agencée dans une cavité 6 de la pièce 2 et une extrémité 7 configurée pour pouvoir être agencée dans une cavité 8 de la pièce 3. Lorsque la broche de liaison 4 est ainsi agencée dans les pièces 2 et 3, elle est apte à les maintenir solidaires l'une contre l'autre puis, lorsqu'on le souhaite, à séparer lesdites pièces 2 et 3.

Pour ce faire, le dispositif 1 est configuré pour pouvoir prendre plusieurs configurations dans lesquelles la broche de liaison 4 assure le maintien ou la séparation des pièces 2 et 3.

Dans une configuration dite verrouillée, représentée sur la figure 1, la broche de liaison 4 maintient les pièces 2 et 3 ensemble avec un effort prédéterminé les plaquant l'une contre l'autre.

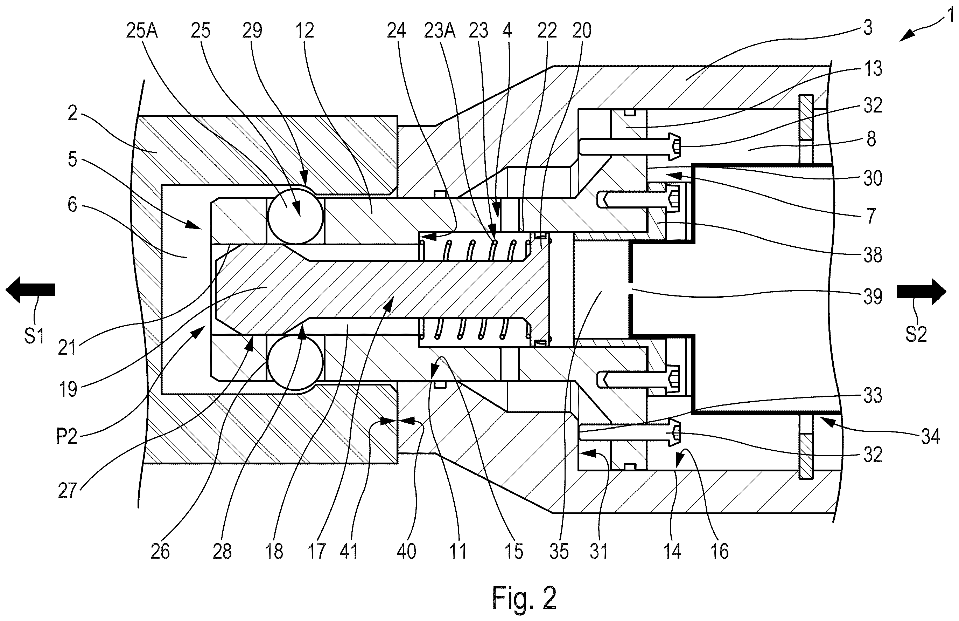

En outre, dans une configuration dite déverrouillée, représentée sur la figure 2, la broche de liaison 4 libère les pièces 2 et 3 de l'effort prédéterminé et ne les maintient plus ensemble.

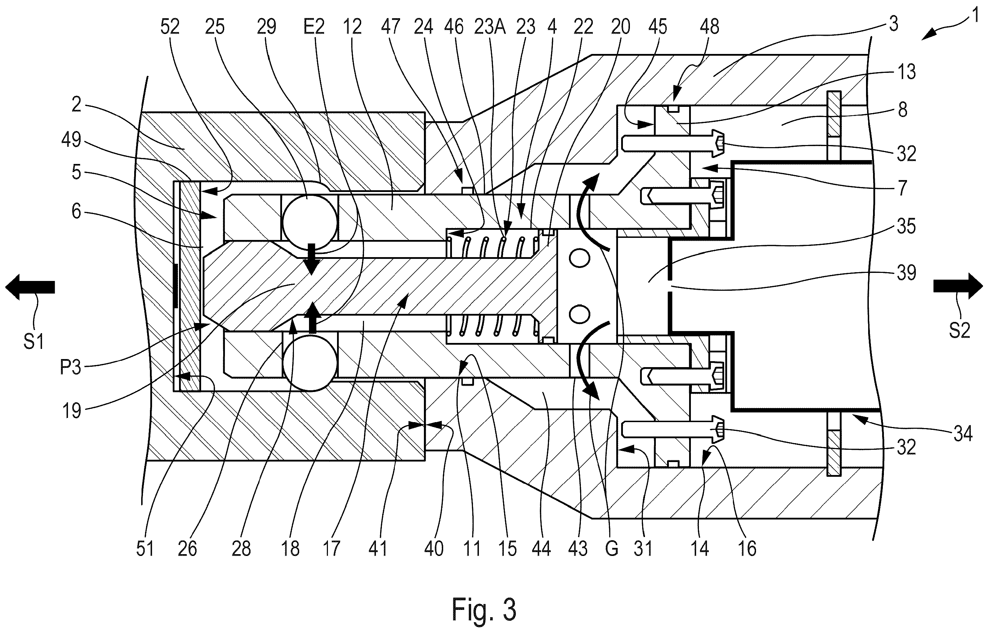

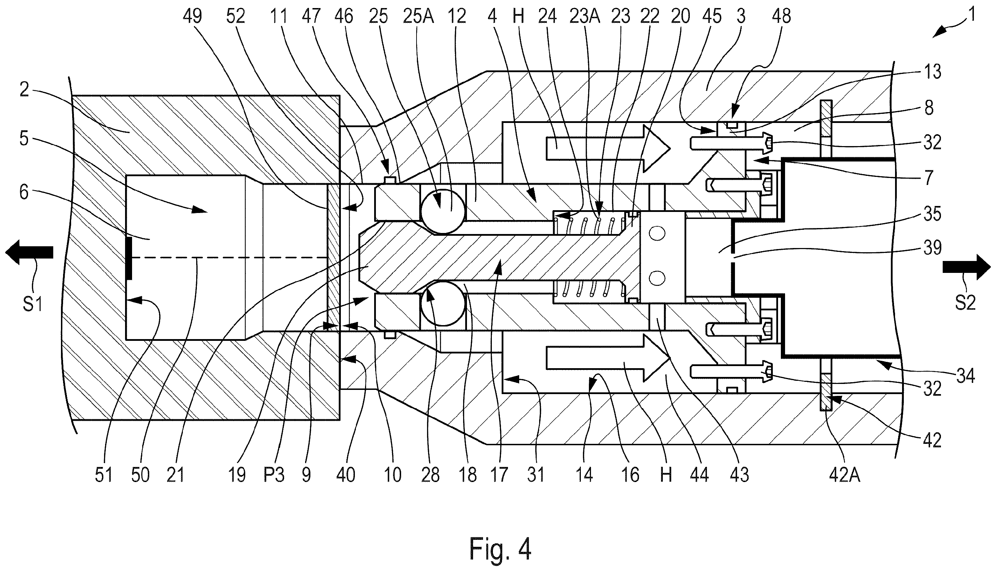

Par ailleurs, dans une configuration dite de séparation, représentée sur la figure 3 et la figure 4, la broche de liaison 4 est déplacée de manière à initier (ou générer) une séparation des pièces 2 et 3 les éloignant l'une de l'autre. Ces configurations seront décrites plus en détail ci-après.

Les cavités 6 et 8 peuvent être pratiquées directement dans les pièces 2 et 3. Toutefois, elles peuvent également être pratiquées dans des pièces rapportées, tels que des boîtiers, qui sont fixées auxdites pièces 2 et 3. Les cavités 6 et 8 présentent, respectivement, des embouchures 9 et 10 (visibles sur la figure 4) destinées à être en regard l'une de l'autre lorsque les pièces 2 et 3 sont maintenues l'une contre l'autre. L'embouchure 10 de la pièce 3 présente un alésage 11 apte à guider la broche de liaison 4 en translation comme expliqué ci-dessous.

La broche de liaison 4 présente une forme longitudinale sensiblement cylindrique. Elle est configurée pour pouvoir coulisser par rapport aux pièces 2 et 3 selon sa direction longitudinale. Pour ce faire, la broche de liaison 4 comporte un tronçon principal 12 s'étendant longitudinalement jusqu'à son extrémité 5. Elle comporte, également, un collet 13 à son extrémité 7. Le tronçon principal 12 est configuré pour pouvoir coopérer avec l'alésage 11 formé à l'embouchure 10. Le collet 13, quant à lui, est configuré pour pouvoir coopérer avec un alésage 14 agencé dans la cavité 8 de la pièce 3. Par « coopérer », on entend que la broche de liaison 4 peut coulisser de manière ajustée dans les alésages 11 et 14. Plus précisément, l'alésage 11 est pourvu d'une surface interne 15 apte à servir de surface de guidage pour le tronçon principal 12. De même, l'alésage 14 est pourvu d'une surface interne 16 apte à servir de surface de guidage pour le collet 13.

Dans d'autres modes de réalisation, la broche de liaison 4 peut présenter des formes variées aptes à permettre un déplacement en translation de ladite broche de liaison 4 par rapport aux pièces 2 et 3. Par exemple, la broche de liaison 4 peut présenter une autre forme de section qu'une section circulaire, comme une section carrée ou une section rectangulaire.

Par ailleurs, le dispositif 1 comporte un plongeur 17 mobile agencé dans une cavité 18 ménagée à l'intérieur de la broche de liaison 4. Le plongeur 17 correspond à une tige pourvue, à l'une de ses extrémités, d'une tête 19 et, à son autre extrémité, d'un piston 20. La tête 19 est agencée dans un alésage 21 de la cavité 18, du côté de l'extrémité 5 de la broche de liaison 4. Le piston 20 est agencé dans un alésage 22 de la cavité 18, du côté de l'extrémité 7 de la broche de liaison 4. La tête 19 et le piston 20 sont aptes à coopérer, respectivement, avec les alésages 21 et 22 de sorte que le plongeur 17 puisse coulisser longitudinalement par rapport à la broche de liaison 4.

En outre, le dispositif 1 comporte un élément élastique 23 agencé dans la broche de liaison 4. L'élément élastique 23 est apte à exercer un effort élastique sur le plongeur 17. L'élément élastique 23 est, notamment, apte à maintenir le plongeur 17 en butée vers l'extrémité 7 de la broche de liaison 4 dans la configuration verrouillée. Dans le premier mode de réalisation, l'élément élastique 23 correspond à un ressort 23A de compression (ci-après ressort 23A). Dans d'autres modes de réalisation, il peut s'agir d'un autre élément usuel (par exemple un coin) apte à exercer un effort sur le plongeur 17.

Le ressort 23A est agencé dans la cavité 18 de la broche de liaison 4 entre un épaulement 24 de ladite cavité 18 et le piston 20 du plongeur 17. Le ressort 23A est configuré pour être en appui contre l'épaulement 24 à une de ces extrémités et contre le piston 20 à son autre extrémité de manière à exercer un effort élastique sur le plongeur 17. Cet effort élastique est apte à maintenir le plongeur 17 vers l'extrémité 7 de la broche de liaison 4 lorsque le dispositif 1 est dans la configuration verrouillée décrite ci-après.

Le dispositif 1 comporte également des éléments de verrouillage 25 mobiles aptes à être déplacés pour faire saillie hors de la broche de liaison 4 de manière à bloquer celle-ci en translation comme décrit ci-dessous. Dans le premier mode de réalisation, les éléments de verrouillage 25 correspondent à des billes 25A. Dans d'autres modes de réalisation, il peut s'agir d'autres éléments usuels aptes à être déplacés de manière à bloquer la translation de la broche de liaison 4.

Les billes 25A sont logées dans des ouvertures 26 de la broche de liaison 4. Ces ouvertures 26 correspondent à des trous traversants s'étendant radialement par rapport à la direction longitudinale de la broche de liaison 4. Les ouvertures 26 débouchent dans la cavité 18, d'une part, et à l'extérieur de la broche de liaison 4 d'autre part. Plus particulièrement, les ouvertures 26 sont agencées de manière à être en regard de la tête 19 du plongeur 17 de sorte que les billes 25A puissent être en contact avec ladite tête 19.

La broche de liaison 4 peut comporter des éléments usuels pour maintenir les billes 25A, par exemple une grille ou un anneau élastique serti.

La position des billes 25A dépend, entre autres, de la partie de la tête 19 en regard des ouvertures 26. En effet, en fonction de la position du plongeur 17 (longitudinalement par rapport à la broche de liaison 4) une portion différente de la tête 19 est en regard des ouvertures 26. Une de ces portions de la tête 19 présente une surface cylindrique 27 sensiblement de même diamètre que l'alésage 21 (dans lequel la tête 19 peut coulisser). Lorsque la surface 27 est en regard des ouvertures 26, les billes 25A sont en contact avec ladite surface 27 de manière à être maintenues pour faire saillie hors de la broche de liaison 4 (figure 1). Une autre portion de la tête 19 présente une surface inclinée 28 de forme conique dont le diamètre diminue par rapport à celui de la surface 27 pour former une pente. Lorsque la surface inclinée 28 est en regard des ouvertures 26, les billes 25A peuvent se déplacer vers l'intérieur de la broche de liaison 4 (figure 3 et figure 4). La surface inclinée 28 est configurée pour que les billes 25A puissent être logées dans les ouvertures 26 sans faire saillie hors de la broche de liaison 4.

De plus, la cavité 6 de la pièce 2 comporte une gorge 29 apte à recevoir les billes 25A lorsque celles-ci font saillie hors de la broche de liaison 4. Lorsque les billes 25A sont maintenues dans la gorge 29 par la tête 19 du plongeur 17, elles sont aptes à bloquer une translation de la pièce 2 par rapport à la broche de liaison 4. En effet, dans cette position, les billes 25A sont aptes à empêcher la pièce 2 de se déplacer longitudinalement dans un sens S1, illustré par une flèche S1 de la figure 1 à la figure 4.

Par ailleurs, la broche de liaison 4 est configurée pour pouvoir venir en appui sur la pièce 3, à son extrémité 7, de manière à bloquer une translation de ladite pièce 3. Plus particulièrement, le collet 13 est configuré pour pouvoir venir en appui contre un épaulement 31. Dans cette configuration, représentée sur la figure 1, la broche de liaison 4 est apte à empêcher la pièce 3 de se déplacer longitudinalement dans un sens S2, opposé au sens S1 et illustré par une flèche S2 de la figure 1 à la figure 5.

Dans le mode de réalisation représenté de la figure 1 à la figure 4, l'appui entre le collet 13 et l'épaulement 31 est obtenu par un contact indirect, en particulier via des éléments réglables précisés ci-après. Toutefois, dans d'autres modes de réalisation, cet appui entre le collet 13 et l'épaulement 31 peut être obtenu par un contact direct.

Les pièces 2 et 3, assemblées avec la broche de liaison 4 tel que décrit ci-dessus, sont bloquées en translation l'une par rapport à l'autre. Toutefois, pour des raisons de montage, il existe un jeu dans la liaison entre les pièces 2 et 3 et la broche de liaison 4. Ce jeu est compensé par la mise en précontrainte de l'assemblage comme décrit ci-après.

Dans le mode de réalisation représenté de la figure 1 à la figure 4, le dispositif 1 comporte une pluralité de vis de serrage 32 permettant d'obtenir le contact indirect entre le collet 13 et l'épaulement 31. Les vis de serrage 32 sont vissées dans le collet 13 de manière traversante. Elles présentent, chacune, une extrémité d'appui 33 apte à venir en appui contre l'épaulement 31. Le serrage des vis de serrage 32 permet de mettre l'assemblage sous précontrainte.

Le dispositif 1 peut comprendre une seule vis de serrage 32. Toutefois, de préférence, il comprend au moins deux vis de serrage 32. De plus, les vis de serrage 32 sont agencées régulièrement sur le tour du collet 13. De cette manière, on obtient un effort global d'appui de la broche de liaison 4 sur la pièce 3 qui est homogène et équilibré. Cela permet, notamment, d'augmenter la fiabilité du dispositif 1.

Toutefois, dans d'autres modes de réalisation, les vis de serrage 32 peuvent être réparties de manière hétérogène sur le tour du collet 13. Ceci permet de concentrer l'effort prédéterminé pour précontraindre les pièces 2 et 3 à un endroit particulier en fonction des sollicitations auxquelles les pièces 2 et 3 sont susceptibles d'être soumises.

En outre, le dispositif 1 comporte un générateur de pression 34 apte à être commandé pour générer une pression. Le dispositif 1 comporte, notamment, une chambre 35 configurée pour recevoir la pression générée par le générateur de pression 34. La chambre 35 est agencée dans la cavité 18 de la broche de liaison 4. Elle est délimitée longitudinalement par le piston 20 et par une paroi 30 à l'extrémité 7 de la broche de liaison 4.

Le plongeur 17 est agencé en regard de la chambre 35 de sorte que le piston 20 soit apte à former une paroi hermétique (mobile) entre ladite chambre 35 et le reste de la cavité 18. Le piston 20 est configuré pour être soumis à l'action de la pression générée dans la chambre 35 de manière à déplacer le plongeur 17 en comprimant le ressort 23A. La chambre 35 présente donc un volume variable qui varie lorsque le plongeur 17 est déplacé. Le déplacement et les positions particulières prises par le plongeur 17 seront détaillés ci-dessous dans la description des configurations du dispositif 1.

Le générateur de pression 34 correspond à un système de distribution d'un fluide (gaz ou liquide) apte à générer une pression à l'aide dudit fluide. Il peut s'agir d'un système interne, à savoir directement agencé sur la broche de liaison 4, ou d'un système externe déporté. Par exemple, comme représenté de la figure 1 à la figure 7, le générateur de pression 34 peut correspondre à une cartouche pyrotechnique génératrice de gaz. Il peut également s'agir d'un système hydraulique ou pneumatique muni d'une pompe ou d'une bouteille de gaz sous pression commandée par une vanne pilote.

En outre, le générateur de pression 34 est configuré pour pouvoir être commandé par un système de commande ou un système de déclenchement usuel (non représenté) embarqué sur le dispositif 1. Ainsi, la commande du générateur de gaz est indépendante des conditions extérieures, ce qui rend le dispositif 1 particulièrement fiable.

Dans le mode de réalisation représenté de la figure 1 à la figure 4, le générateur de pression 34 est agencé sur une pièce rapportée 38 fixée à l'extrémité 7 de la broche de liaison 4. La pièce rapportée 38 correspond à une pièce d'interface servant à fixer le générateur de pression 34. Elle sert également de butée au piston 20 lorsque le plongeur 17 est maintenu par le ressort 23A dans la configuration verrouillée. Toutefois, d'autres éléments usuels peuvent être utilisés comme butée pour le piston 20, par exemple un anneau d'arrêt ou une forme particulière du plongeur 17 et/ou de la broche de liaison 4.

La chambre 35 est ménagée en partie dans la cavité 18 et en partie dans la pièce rapportée 38. La chambre 35 est apte à subir la pression générée par le générateur de pression 34 sans être endommagée et/ou déformée par ce dernier. Le générateur de pression 34 comporte un orifice 39 débouchant dans la chambre 35 de manière à permettre au fluide du générateur de pression 34 de pénétrer dans la chambre 35 et d'y générer une pression.

Le dispositif 1 est configuré pour pouvoir prendre, successivement, la configuration verrouillée (figure 1), la configuration déverrouillée (figure 2) et la configuration de séparation (figure 3 et figure 4) qui sont décrites ci-dessous.

Dans la configuration verrouillée, représentée sur la figure 1, le dispositif 1 maintient les pièces 2 et 3 ensemble en les plaquant solidairement l'une contre l'autre. Pour ce faire, la broche de liaison 4 est verrouillée entre les pièces 2 et 3. Plus précisément, elle est agencée entre les pièces 2 et 3 de manière à les bloquer en translation. La translation de la pièce 2 est bloquée dans le sens S1 et la translation de la pièce 3 est bloquée dans le sens S2, comme précisé ci-dessous. De plus, les pièces 2 et 3 sont plaquées l'une contre l'autre de manière à bloquer, également, la rotation de l'une par rapport à l'autre.

Dans cette configuration verrouillée, le plongeur 17 est maintenu par le ressort 23A dans une position P1 représentée sur la figure 1. Dans cette position P1, le piston 20 est en butée contre la pièce rapportée 38. De plus, la surface 27 de la tête 19 est en regard des ouvertures 26 de la broche de liaison 4. Les billes 25A sont donc maintenues dans la gorge 29 de la pièce 2 par la tête 19 du plongeur 17, comme illustré par des flèches E1 sur la figure 1. La pièce 2 est donc bloquée en translation par la broche de liaison 4 dans le sens S1 et par la pièce 3 dans le sens S2.

Par ailleurs, dans cette configuration verrouillée, les vis de serrage 32 sont en appui contre l'épaulement 31 de la pièce 3. La pièce 3 est donc bloquée en translation par la broche de liaison 4 dans le sens S2 et par la pièce 2 dans le sens S1. En outre, le serrage des vis de serrage 32 précontraint les pièces 2 et 3 l'une contre l'autre de manière à tenir les efforts extérieurs en translation et en rotation.

Ainsi, dans la configuration verrouillée, les pièces 2 et 3 sont toutes les deux bloquées en translation (d'un côté comme de l'autre) et en rotation. Elles sont donc liées ensemble par le dispositif 1.

De plus, dans cette configuration verrouillée, une face externe 40 de la pièce 2 est plaquée contre une face externe 41 de la pièce 3 avec un effort prédéterminé, représenté par une double flèche F sur la figure 1. Cet effort prédéterminé est obtenu par le serrage des vis de serrage 32. En effet, le serrage des vis de serrage 32 génère un déplacement relatif de la broche de liaison 4 par rapport à la pièce 3. Ce déplacement relatif de la broche de liaison 4 par rapport à la pièce 3 entraîne un rapprochement des pièces 2 et 3 l'une vers l'autre jusqu'au contact des faces externes 40 et 41. Lorsque les faces externes 40 et 41 sont en contact l'une de l'autre, le serrage des vis de serrage 32 permet de définir la force avec laquelle on souhaite plaquer les pièces 2 et 3 l'une contre l'autre.

Ainsi, dans la configuration verrouillée, le dispositif 1 est non seulement apte à lier les pièces 2 et 3 ensemble, mais également à les précontraindre l'une contre l'autre. Cette précontrainte est réglable à l'aide des vis de serrage 32 ce qui permet d'obtenir l'effort prédéterminé souhaité entre les pièces 2 et 3. La précontrainte peut, notamment, être réglée pour pouvoir reprendre des efforts et/ou des moments particuliers entre les pièces 2 et 3. Par « reprendre » des effort et/ou des moments, on entend que tout effort et/ou moment externe exercé sur l'une des pièces 2 et 3 est transmis à l'autre pièce sans mouvement relatif entre lesdites pièces 2 et 3. Par exemple, la précontrainte peut être réglée (c'est-à-dire les pièces 2 et 3 peuvent être plaquées l'une contre avec suffisamment de force) pour pouvoir reprendre :
- des efforts axiaux (longitudinalement par rapport à la broche de liaison 4) ;
- des efforts transversaux (radialement par rapport à la broche de liaison 4) ;
- des moments normaux (en torsion) ; et
- des moments de flexion (transverses à l'appui entre les pièces 2 et 3).

Dans la configuration déverrouillée, représentée sur la figure 2, le dispositif 1 libère les pièces 2 et 3 de l'effort prédéterminé les plaquant l'une contre l'autre. Pour ce faire, la broche de liaison 4 est déverrouillée de manière à ne plus bloquer la translation de la pièce 2 dans le sens S1, comme précisé ci-dessous.

Dans cette configuration déverrouillée, le plongeur 17 est déplacé dans une position P2 représentée sur la figure 2. Pour atteindre cette position P2, il est déplacé par une pression générée par le générateur de pression 34 dans la chambre 35 de manière à comprimer le ressort 23A. Ainsi, la surface inclinée 28 de la tête 19 du plongeur 17 vient en regard des ouvertures 26 permettant aux billes 25A de pouvoir entrer dans lesdites ouvertures. La position P2 correspond à la position du plongeur 17 dans laquelle les billes 25A peuvent entrer suffisamment dans les ouvertures 26 pour ne plus bloquer la translation de la pièce 2 dans le sens S1.

Ainsi, dans la configuration déverrouillée, les pièces 2 et 3 ne sont plus soumises à la précontrainte les plaquant l'une contre l'autre. De plus, elles ne sont plus liées solidairement entre elles puisque la broche de liaison 4 ne bloque plus la translation de l'une par rapport à l'autre.

La configuration déverrouillée peut être obtenue à un instant particulier souhaité. En effet, le dispositif 1 est configuré de sorte que le générateur de pression 34 puisse être commandé par un ordre généré à un instant précis. De préférence, il s'agit d'un ordre généré automatiquement, par exemple à un instant préalablement déterminé ou lorsque certaines conditions sont remplies. Il peut, également, s'agir d'un ordre généré par un opérateur.

Par ailleurs, dans la configuration de séparation, représentée sur la figure 3 et la figure 4, le dispositif 1 sépare les pièces 2 et 3 en les éloignant l'une de l'autre. Pour ce faire, la broche de liaison 4 est déplacée de manière à venir en contact contre une butée 42 de la pièce 3. Le choc généré par le contact de la broche de liaison 4 contre la butée 42 permet de donner une impulsion à la pièce 3. Cette impulsion est configurée pour initier la séparation des pièces 2 et 3.

Dans cette configuration de séparation, le plongeur 17 est déplacé dans une position P3 par la pression générée par le générateur de pression 34 dans la chambre 35. La position P3 correspond à une position du plongeur 17 dans laquelle ce dernier ouvre des passages fluidiques 43. Les passages fluidiques 43 correspondent à des trous traversants pratiqués radialement dans la broche de liaison 4. Ils sont agencés de manière à déboucher, à une de leur extrémité, dans la cavité 8 de la pièce 2 et, à leur autre extrémité, dans la cavité 18 de la broche de liaison 4. Plus précisément, ils débouchent dans la cavité 8 au niveau d'une seconde chambre 44.

La chambre 44, représentée sur les figures 3 et 4, correspond à un espace libre ménagé entre la paroi externe de la broche de liaison 4 et la paroi interne de la cavité 8. La chambre 44 est donc agencée autour de la broche de liaison 4. Elle est délimitée longitudinalement par une face latérale 45 du collet 13 et un bord 46 de l'alésage 11. La broche de liaison 4 est configurée pour fermer hermétiquement la chambre 44. Pour ce faire, le dispositif 1 comporte des joints (non représentés) agencés dans des gorges 47 et 48 (figure 3 et figure 4), respectivement, sur la broche de liaison 4 et dans la cavité 8.

Lorsque le plongeur 17 est dans la position P3, le piston 20 ouvre les passages fluidiques 43 de manière à permettre au fluide générant la pression dans la chambre 35, de passer dans la chambre 44, comme illustré par des flèches G sur la figure 3. Lorsque le plongeur 17 est dans la position P3, le générateur de pression 34 est donc apte à générer une pression dans la chambre 44.

Dans la configuration de séparation, le générateur de pression 34 est configuré pour générer une pression dans la chambre 44 apte à déplacer la broche de liaison 4 dans le sens S2. En effet, la pression dans la chambre 44 est apte à produire un effort sur la face latérale 45 du collet 13, orienté longitudinalement dans le sens S2. La broche de liaison 4 est configurée pour transmettre cet effort aux billes 25A de manière à les forcer vers l'intérieur de ladite broche de liaison 4, comme illustré par des flèches E2 sur la figure 3. Pour ce faire, la gorge 29 présente une forme ayant tendance à diriger les billes 25A vers l'intérieur de la broche de liaison 4 lorsque celle-ci exerce un effort sur les billes 25A dans le sens S2.

Selon la géométrie de la broche de liaison 4 et de la gorge 29, les billes 25A peuvent entrer d'elles-mêmes vers la broche de liaison 4 dans la configuration déverrouillée.

En outre, le dispositif 1 est configuré de sorte que, lorsque la pression dans la chambre 44 atteint une pression seuil générant un effort dit de séparation sur le collet 13, les billes 25A sont déplacées à l'intérieur de la broche de liaison 4, comme représenté sur la figure 4. L'effort de séparation, illustré par des flèches H sur la figure 4, correspond à un effort permettant de conférer une dynamique souhaitée à la broche de liaison 4. D'une part, l'effort de séparation permet de vaincre les frottements entre les billes 25A et la gorge 29 afin de les faire entrer à l'intérieur des ouvertures 26 si nécessaire. D'autre part, il permet de déplacer la broche de liaison 4, avec plus ou moins d'énergie (en particulier avec plus ou moins de vitesse), jusqu'à venir générer un choc au contact de la butée 42.

Dans le mode de réalisation représenté de la figure 3 à la figure 4, la butée 42 correspond à un anneau élastique 42A. Cet anneau élastique 42A est agencé dans une gorge prévue à cet effet dans la cavité 8 de la pièce 2. Dans d'autres modes de réalisation, la butée 42 peut être réalisée par d'autres éléments usuels permettant de créer un obstacle pour la broche de liaison 4. Par exemple, il peut s'agir d'une forme particulière prévue sur la pièce 3 ou d'une pièce rapportée comme une couronne fixée sur la pièce 3.

Ainsi, dans la configuration de séparation, les pièces 2 et 3 ne sont plus liées ensemble et elles sont physiquement séparées l'une de l'autre. En effet, le contact de la broche de liaison 4 sur l'anneau élastique 42A créé un choc (plus ou moins violent) donnant une impulsion à la pièce 3 longitudinalement dans le sens S2. Sous l'effet de ce choc, la pièce 3 est déplacée en s'éloignant de la pièce 2. Ce choc est, notamment, configuré pour éloigner suffisamment la pièce 3 de la pièce 2 de sorte que la broche de liaison 4 soit complètement sortie de la cavité 6. Selon l'application considérée, d'autres efforts peuvent contribuer à la séparation des pièces 2 et 3, par exemple des efforts aérodynamiques ou l'inertie des pièces 2 et 3.

Dans le mode de réalisation représenté de la figure 1 à la figure 4, la broche de liaison 4 est rétractée dans la pièce 3 après la séparation des pièces 2 et 3. Ainsi, c'est l'ensemble secondaire (pièce 3) qui garde la broche de liaison 4 et non pas l'ensemble principale (pièce 2). Ceci permet de minimiser la masse de la partie du dispositif 1 qui reste sur la pièce 2 après la séparation des pièces 2 et 3.

Par ailleurs, comme représenté sur la figure 4, le dispositif 1 est configuré de sorte que la broche de liaison 4 soit entièrement rétractée à l'intérieur de la cavité 8 après la séparation des pièces 2 et 3. De cette manière, la broche de liaison 4 ne comprend aucune partie située à l'extérieur de la pièce 3 qui serait susceptible d'entrer en contact avec des éléments extérieurs ou de perturber un flux aérodynamique. Cette caractéristique peut, notamment, être importante dans le cadre d'une séparation d'objets dans un environnement aérien ou en apesanteur (ou en pseudo-apesanteur).

Le dispositif 1 tel que décrit ci-dessus est donc un dispositif unique qui permet d'assurer, à lui seul, au moins trois fonctions :
- il permet de lier solidairement les pièces 2 et 3 ensemble avec une précontrainte configurée pour éviter tout mouvement relatif entre les pièces 2 et 3 ;
- il permet, lorsqu'un ordre pour commander le générateur de pression 34 est généré, de dissocier les pièces 2 et 3 en les libérant de ladite précontrainte ; et
- il permet de séparer les pièces 2 et 3 en les éloignant l'une de l'autre.

Par ailleurs, comme représenté schématiquement sur la figure 3 et la figure 4, le dispositif 1 comporte un bouchon 49 mobile agencé dans de la cavité 6 de la pièce 2. Il comporte, également, un ressort de compression représenté schématiquement par un trait en pointillés 50 sur la figure 4. Le ressort est agencé entre un fond 51 et le bouchon 49 de manière à exercer un effort élastique sur ledit bouchon 49 en le poussant vers l'embouchure 9 de la cavité 6. Pour des raisons de simplification des dessins, le bouchon 49 est représenté seulement sur la figure 3 et la figure 4.

Dans la configuration verrouillée et la configuration déverrouillée, le dispositif 1 est configurée de sorte que la broche de liaison 4 soit en appui contre une face 52 du bouchon 49 de manière à le maintenir vers le fond 51 en comprimant le ressort.

Dans la configuration de séparation, le dispositif 1 est configuré de sorte que la broche de liaison 4, déplacée dans le sens S2, libère le bouchon 49. Sous l'action du ressort, le bouchon 49 est alors apte à être déplacé vers l'embouchure 9 de manière à la fermer.

En outre, dans une réalisation préférée, la face 52 du bouchon 49 présente une forme aérodynamique adaptée à la face externe 40 de la pièce 2. Cette face 52 est configurée pour épouser la forme de la face externe 40 lorsque le bouchon ferme l'embouchure 9.

Ainsi, après la séparation des pièces 2 et 3, la cavité 6 de la pièce 2 est fermée par le bouchon 49. Ceci permet d'éviter que des éléments extérieurs interfèrent avec la cavité 6. Selon l'application considérée, cela peut permettre de limiter des effets de trainée susceptibles d'être générés au niveau de la cavité 6, ou d'éviter qu'un flux thermique n'entre dans la cavité 6 (par exemple pour une sortie ou entrée atmosphérique).

Dans d'autres modes de réalisation, le bouchon 49 peut être configuré et/ou agencé différemment pour fermer la cavité 6. De plus, il peut être agencé sur l'une ou l'autre des pièces 2 et 3. Le dispositif 1 peut, également, comporter un bouchon sur chacune des pièces 2 et 3.

Des modes de réalisation particuliers du dispositif 1, sont décrits ci-dessous. Les trois premiers modes de réalisation ci-dessous concernent des variantes de réalisation pour obtenir l'effort prédéterminé permettant de précontraindre les pièces 2 et 3.

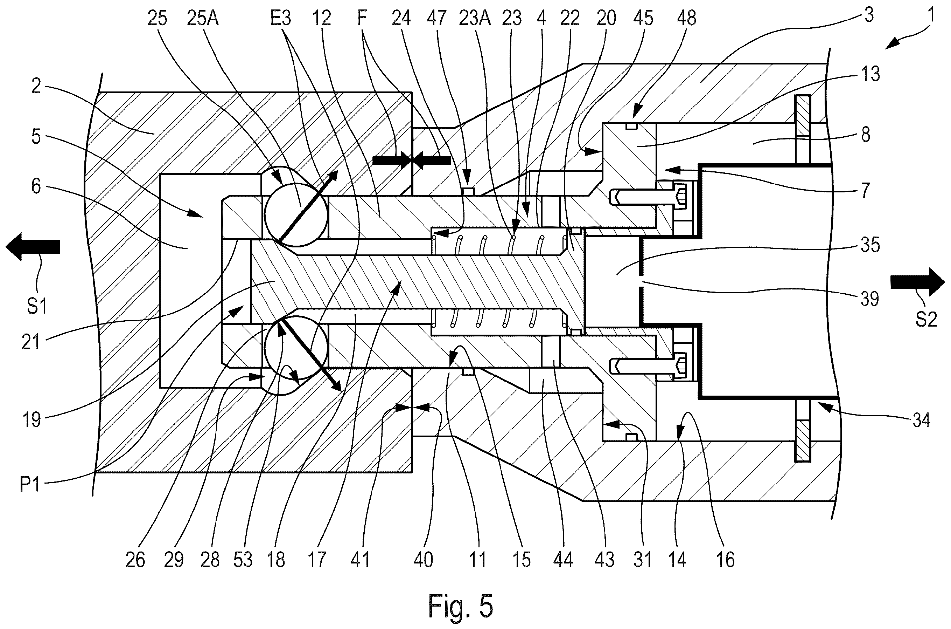

Dans un premier mode de réalisation, représenté sur la figure 5, la précontrainte permettant de maintenir les pièces 2 et 3 plaquées l'une contre l'autre est obtenue à l'aide du ressort 23A plutôt qu'avec les vis de serrage 32. En variante, cette précontrainte peut être obtenue par d'autres éléments usuels comme des rondelles ressort.

Dans ce premier mode de réalisation, la gorge 29 de la cavité 6 comprend une pente 53 particulière. En effet, cette pente 53 et la surface inclinée 28 de la tête 19 du plongeur 17 sont configurées pour permettre au ressort 23A de maintenir les billes 25A dans la gorge 29 tout en exerçant un effort sur la pièce 2, comme détaillé ci-dessous.

Le dispositif 1 selon ce premier mode de réalisation est représenté dans la configuration verrouillée sur la figure 5. Dans cette configuration verrouillée, la face latérale 45 du collet 13 de la broche de liaison 4 est en contact direct avec l'épaulement 31 de la pièce 3. De plus, le plongeur 17 est maintenu, sous l'action d'un effort élastique exercé par le ressort 23A dans la position P1 dans laquelle il maintient les billes 25A dans la gorge 29.

Cependant, dans ce premier mode de réalisation, la position P1 correspond à une position du plongeur 17 dans laquelle la surface inclinée 28 de la tête 19 est en regard des ouvertures 26. En effet, le ressort 23A exerce un effort élastique sur le plongeur 17 qui est transmis aux billes 25A, via la surface inclinée 28. Cet effort élastique permet de déplacer les billes 25A dans la gorge 29 jusqu'au contact avec la pente 53. La pente 53 est configurée pour bloquer la sortie des billes 25A. La pente 53 et la surface inclinée 28 ne présentent pas nécessairement la même inclinaison.

Dans cette position, les billes 25 sont suffisamment déplacées dans la gorge 29 pour verrouiller la broche de liaison 4 en translation. Toutefois, les billes 25A ne peuvent pas sortir d'avantage car elles sont bloquées par la pente 53. Par conséquent, dans cette position, les billes 25A sont aptes à transmettre l'effort élastique du ressort 23A (lui-même transmis par le plongeur 17) à la pièce 2, comme illustré par des flèches E3 sur la figure 5.

Par ailleurs, dans ce premier mode de réalisation, la configuration déverrouillée et la configuration de séparation sont analogues à celles décrites dans le premier mode de réalisation présenté ci-avant.

Dans ce premier mode de réalisation, les caractéristiques du ressort 23A, à savoir sa raideur et sa longueur, permettent de définir l'effort prédéterminé avec lequel on plaque les pièces 2 et 3 l'une contre l'autre.

Ainsi, dans ce mode de réalisation particulier, le verrouillage de la broche de liaison 4 assurant la fonction de maintien des pièces 2 et 3 ensemble et le plaquage des pièces 2 et 3 l'une contre l'autre assurant la fonction de précontrainte sont obtenues par l'action d'un seul et même élément, à savoir le ressort 23A.

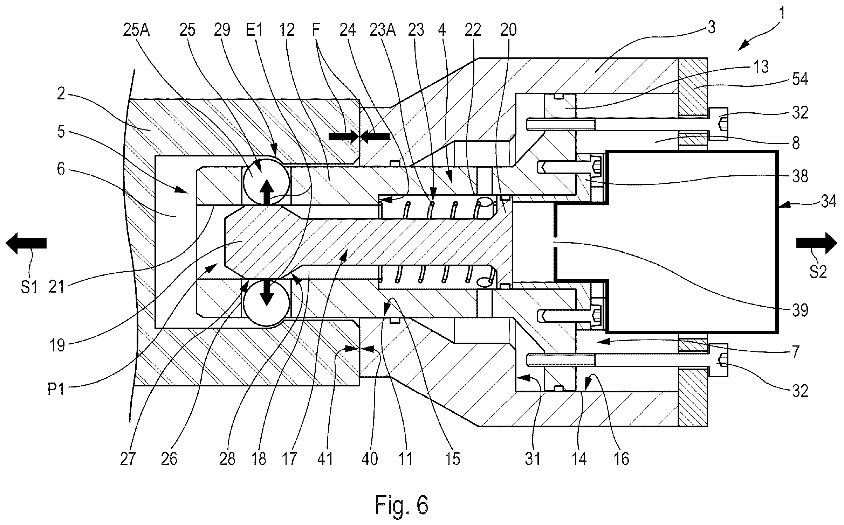

Dans un deuxième mode de réalisation, représenté sur la figure 6, la précontrainte permettant de plaquer les pièces 2 et 3 l'une contre l'autre est obtenue par un agencement différent des vis de serrage 32. Dans ce deuxième mode de réalisation, le dispositif 1 comporte une bride arrière 54 fixée sur la pièce 3 du côté de l'extrémité 7 de la broche de liaison 4 dans le sens S2. La bride arrière 54 comprend des trous de passage pour les vis de serrage 32. Les vis de serrage 32 sont agencées traversantes dans la bride arrière 54 de sorte que leur extrémité filetée soit vissée dans le collet 13 de la broche de liaison 4.

De cette manière, les vis de serrage 32 sont en appui contre la bride arrière 54 au niveau de leur tête de vis et vissées dans la broche de liaison 4. Le serrage des vis de serrage 32 permet de tirer la broche de liaison 4 dans le sens S2. Dans la configuration verrouillée représentée sur la figure 6, les billes 25A sont sorties. Par conséquent, le serrage des vis de serrage 32 permet de plaquer les pièces 2 et 3 l'une contre l'autre avec un effort prédéterminé souhaité.

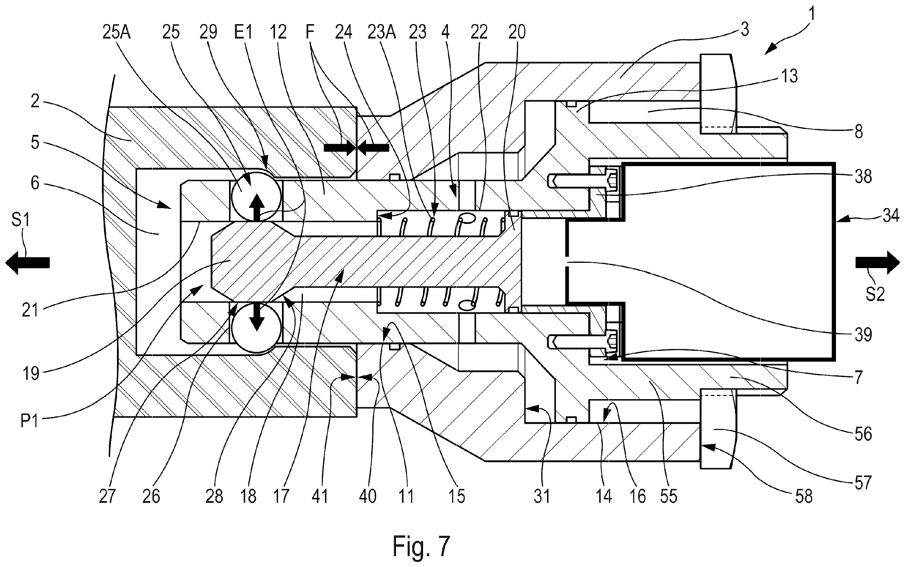

Dans un troisième mode de réalisation, représenté sur la figure 7, la précontrainte permettant de plaquer les pièces 2 et 3 l'une contre l'autre est obtenue à l'aide d'un écrou 57 vissé sur la broche de liaison 4. Dans ce troisième mode de réalisation, la broche de liaison 4 comporte un prolongement 55 à son extrémité 7. Ce prolongement 55 comprend un filetage 56 pour visser l'écrou 57. En outre, l'écrou 57 est configuré pour venir en appui contre une surface d'appui 58 de la pièce 3 lorsqu'il est vissé sur le filetage 56. Le dispositif 1 peut comporter une pièce intermédiaire ou une rondelle entre l'écrou 57 et la pièce 3.

Le dispositif 1 est configuré de sorte que, en vissant l'écrou 57 dans le filetage 56, on est en mesure de tirer la broche de liaison 4 dans le sens S2 en prenant appui sur la pièce 3. Dans la configuration verrouillée représentée sur la figure 7, les billes 25A sont sorties. Par conséquent, l'écrou 57 permet, en tirant la broche de liaison 4, de plaquer les pièces 2 et 3 l'une contre l'autre avec un effort prédéterminé souhaité.

Dans un autre mode de réalisation particulier (non représenté), le dispositif 1 est configuré de manière à obtenir un choc plus important lorsque la broche de liaison 4 entre en contact avec l'anneau élastique 42A. Ce choc puissant est obtenu en générant un effort de séparation important pour propulser la broche de liaison 4 contre l'anneau élastique 42A. Pour ce faire, le dispositif 1 est configuré de sorte que le plongeur 17, lorsqu'il est déplacé par la pression générée par le générateur de pression 34 dans la chambre 35, atteint la position P3 avant d'atteindre la position P2. Autrement dit, les passages fluidiques 43 sont ouverts par le plongeur 17 alors que la broche de liaison 4 est encore verrouillée par les billes 25A. Ceci permet à la pression dans la chambre 44 d'augmenter sans que la broche de liaison 4 ne soit déplacée. Un effort de séparation plus important peut donc être obtenu.

Le dispositif 1 est configuré de sorte que le plongeur 17 soit déplacé dans la position P2 lorsque la pression dans la chambre 44 est apte à générer un effort de séparation avec une intensité souhaitée. Lorsque le plongeur 17 est dans la position P2, la broche de liaison 4 est déverrouillée et peut être déplacée contre l'anneau élastique 42A en produisant un choc brutal.

Ainsi, on est en mesure d'obtenir un dispositif 1 avec un mouvement de la broche de liaison 4, et donc une séparation des pièces 2 et 3, qui est adapté à l'application considérée. En effet, en fonction du mode de réalisation envisagé, les positions P2 et P3 du plongeur 17 peuvent être configurées pour obtenir une rétractation plus ou moins rapide et brutale de la broche de liaison 4 générant un choc plus ou moins puissant.

Par exemple, l'une des pièces 2 et 3 peut comporter des équipements sensibles aux chocs et/ou aux fortes vibrations, tels que des équipements électroniques. Le dispositif 1 permet d'obtenir une liaison séparable avec un niveau de choc réduit, de sorte que ces équipements ne sont pas endommagés ou perturbés lors de la séparation des pièces 2 et 3. A l'inverse, si les pièces 2 et 3 sont insensibles aux chocs et/ou aux vibrations, il est possible de prévoir un dispositif 1 configuré pour séparer les pièces 2 et 3 en les éloignant plus franchement et plus rapidement l'une de l'autre. La séparation obtenue par un tel dispositif 1 resterait, toutefois, moins brutale que les séparations connues par détonation (par exemple par écrou explosif).

Par ailleurs, dans des variantes de réalisation (non représentés), les éléments de verrouillage 25 correspondent à d'autres éléments usuels que les billes 25A. En fonction la variante de réalisation envisagée, on est en mesure d'obtenir des surfaces d'appui entre les éléments de verrouillage 25 et la gorge 29 aptes à supporter des efforts de verrouillage maximale plus ou moins importants.

Dans une première variante, les éléments de verrouillage 25 correspondent à des rouleaux ou à des tonneaux. De plus, la gorge 29 présente une forme adaptée de sorte que, dans la configuration verrouillée, les rouleaux ou tonneaux présentent un appui linéique dans ladite gorge 29.

Dans une seconde variante, les éléments de verrouillage 25 correspondent à des coins ou à des clavettes. De plus, la gorge 29 présente une forme adaptée de sorte que, dans la configuration verrouillée, les coins ou les clavettes présentent un appui surfacique dans ladite gorge 29.

Dans le cadre de la présente invention, le dispositif 1 tel que décrit ci-dessus est apte à mettre en œuvre un procédé de liaison et de séparation (ci-après procédé) des pièces 2 et 3. Dans un mode de réalisation particulier, décrit ci-dessous, le procédé est mis en œuvre par un seul dispositif 1. Dans d'autres modes de réalisation, le procédé peut être mis en œuvre par une pluralité de dispositifs 1.

Le procédé est destiné à permettre la séparation des pièces 2 et 3 liées solidairement ensemble par le dispositif 1 dans la configuration verrouillée. Pour ce faire, le procédé comprend une étape de déverrouillage et une étape de séparation mises en œuvre successivement.

Préalablement à l'étape de déverrouillage, et à l'étape de séparation, le procédé peut comprendre une étape de liaison. Cette étape de liaison consiste à lier les pièces 2 et 3 ensemble à l'aide d'un dispositif 1.

Tout d'abord, les pièces 2 et 3 sont amenées l'une contre l'autre de sorte que les cavités 6 et 8 soient en regard. La broche de liaison 4 est ensuite insérée dans la cavité 8 de la pièce 3, puis coulissée dans le sens S1 de sorte que son extrémité 5 se loge dans la cavité 6 de la pièce 2. Pour que la broche de liaison 4 puisse être coulissée dans la pièce 2, le plongeur 17 est manuellement déplacé pour que les billes 25A puissent être entrées dans les ouvertures 26. La broche de liaison 4 peut alors être coulissée dans le sens S1 jusqu'à ce que les ouvertures 26 soient en regard de la gorge 29. Lorsque tel est le cas, le plongeur 17 est relâché et, sous l'action du ressort 23A, il déplace et maintient les billes 25A dans la gorge 29.

Une fois que les billes 25A sont dans la gorge 29, les vis de serrage 32 sont vissées pour venir en appui de l'épaulement 31 de la pièce 3. La broche de liaison 4 est alors tirée dans le sens S2, entraînant la pièce 2, via les billes 25A, contre la pièce 3. Un serrage adapté des vis de serrage 32 est réalisé pour obtenir un effort prédéterminé souhaité plaquant les pièces 2 et 3 l'une contre l'autre. Ainsi, les pièces 2 et 3 sont solidairement liées ensemble avec une précontrainte.

A un instant prédéterminé, par exemple lorsque certaines conditions sont remplies, les pièces 2 et 3 sont séparées l'une de l'autre. Pour ce faire, l'étape de déverrouillage est, d'abord, mise en œuvre. Cette étape consiste à commander le générateur de pression 34 pour qu'il génère une pression dans la chambre 35. De préférence, le générateur de pression 34 est commandé par un ordre généré de manière automatique. La pression générée dans la chambre 35 déplace alors le plongeur 17 dans la position P2 qui libère les billes 25A. La libération des billes 25A leur permet d'entrer dans les ouvertures 26 pour déverrouiller la broche de liaison 4. Une fois l'étape de déverrouillage terminée, les pièces 2 et 3 sont libérées de la précontrainte et ne sont plus maintenues ensemble.

L'étape de séparation est mise en œuvre après l'étape de déverrouillage. Dans cette étape de séparation, le plongeur 17 est déplacé dans la position P3 par la pression générée dans la chambre 35. Le plongeur 17 ouvre alors les passages fluidiques 43 entre la chambre 35 et la chambre 44. Le fluide générant la pression dans la chambre 35 est ainsi apte à passer dans la chambre 44 pour y générer une pression. La pression dans la chambre 44 déplace la broche de liaison 4 dans le sens S2 puisque celle-ci est désormais déverrouillée. La broche de liaison 4, sous l'action de la pression dans la chambre 44, est déplacée jusqu'à venir en contact contre l'anneau élastique 42A. Le choc produit par ce contact génère la séparation des pièces 2 et 3 en éloignant la pièce 3 de la pièce 2.

Dans un mode de réalisation particulier, le procédé est destiné à obtenir une séparation des pièces 2 et 3 plus marquée. Pour ce faire, l'étape de déverrouillage et l'étape de séparation varient comme précisé ci-dessous.

L'étape de déverrouillage consiste à générer une pression dans la chambre 44 avant de déverrouiller la broche de liaison 4. Pour ce faire, à partir de la configuration verrouillée, le générateur de pression 34 est commandé pour générer une pression dans la chambre 35. Dans un premier temps, la pression dans la chambre 35 déplace le plongeur 17 dans la position P3 dans laquelle il ouvre les passages fluidiques 43. Le fluide dans la chambre 35 passe donc dans la chambre 44 pour y générer une pression. La broche de liaison 4 étant toujours verrouillée, elle n'est pas déplacée par la pression dans la chambre 44. Par conséquent, la pression dans la chambre 44 augmente.

Dans un second temps, la pression dans la chambre 35 augmente de manière à déplacer le plongeur 17 dans la position P2. Dans cette position P2, le plongeur 17 libère les billes 25A qui déverrouillent la broche de liaison 4. La broche de liaison 4 est alors propulser rapidement et brutalement contre l'anneau élastique 42A. En effet, comme la pression dans la chambre 44 a pu augmenter, l'effort de séparation propulsant la broche de liaison 4 est plus important. Par conséquent, le choc contre l'anneau élastique 42A est, également, plus important.

Le dispositif 1 tel que décrit ci-dessus est un dispositif compact adapté à des applications très variées. En effet, il présente une architecture et une cinématique simples qui peuvent être adaptées à de nombreux systèmes, notamment des engins volants et/ou spatiaux tels que des fusées ou des systèmes d'armes tels que des missiles. En particulier, il peut être intégré dans un engin de façon indépendante, c'est-à-dire qu'il nécessite uniquement un ordre pour fonctionner.

Par ailleurs, le dispositif 1 est un dispositif à utilisation unique (« one shot » en anglais) commandable rapidement et qui peut être entièrement embarqué. De plus il peut être réarmé facilement par une action externe, notamment manuellement.

Dans le cadre d'une application à une fusée, le dispositif 1 peut être destiné à lier et séparer des éléments de la fusée en vol. En effet, les fusées comportent, généralement, des éléments tels que des étages, des boosters et/ou des coiffes qui présentent une utilité seulement lors du décollage et/ou lors des premières phases de vol. Une fois qu'ils ne sont plus utiles, ces éléments doivent être détachés en vol afin d'alléger la fusée.

Dans le cadre d'une application à un missile, le dispositif 1 peut être destiné à lier et séparer des éléments tels qu'un booster en vol. Il peut, également, être destiné à lier et séparer un missile et un conteneur ou un missile et une interface de tir au sol ou en vol.

Le dispositif 1 tel que décrit ci-dessus présente de nombreux avantages. En particulier :
- il permet, avec un dispositif unique, d'assurer : le maintien des pièces 2 et 3 l'une contre l'autre avec une précontrainte, la désolidarisation desdites pièces 2 et 3.et leur séparation ;
- il permet d'obtenir une précontrainte pour lier les pièces 2 et 3 qui est facilement réglable ;
- selon le mode de réalisation envisagé, il comprend des éléments de verrouillage 25 adaptés à un effort de maintien des pièces 2 et 3 plus ou moins important ;
- selon le mode de réalisation envisagé, il permet d'obtenir une séparation des pièces 2 et 3 qui est plus ou moins franche et brutale ;
- il permet de limiter les effets indésirables liés à la broche de liaison 4 et aux cavités 6 et 8 après la séparation des pièces 2 et 3 (contact entre la broche de liaison 4 et des éléments extérieurs, effets de trainée pour un engin volant) ;
- il permet de minimiser la masse embarquée sur l'ensemble principale (pièce 2) après la séparation des pièces 2 et 3 ;
- il présente une conception robuste à utilisation unique permettant d'obtenir un dispositif fiable ; et
- il présente une conception simple et compacte qui le rend facile à intégrer dans des systèmes variés.

## Revendications

1. Dispositif de liaison séparable de deux pièces, ledit dispositif de liaison (1) comprenant une broche de liaison (4) configurée pour pouvoir être agencée, au moins partiellement, dans une première cavité (6) d'une première desdites pièces (2) et dans une seconde cavité (8) de la seconde desdites pièces (3), ladite broche de liaison (4) étant apte à maintenir solidairement lesdites pièces (2, 3) ensemble et à les séparer,
où le dispositif de liaison (1) comporte un plongeur (17) mobile agencé dans la broche de liaison (4) et un générateur de pression (34) apte à être commandé et configuré pour générer une pression, ledit dispositif de liaison (1) étant configuré pour pouvoir prendre successivement les configurations suivantes :
- une configuration dite verrouillée, dans laquelle le plongeur (17), maintenu par un élément élastique (23), agit sur des éléments de verrouillage (25) qui verrouillent la broche de liaison (4) entre les deux pièces (2, 3), ladite broche de liaison (4) étant configurée pour exercer un effort prédéterminé sur lesdites pièces (2, 3) en les plaquant l'une contre l'autre lorsqu'elle est verrouillée par les éléments de verrouillage (25) ;
- une configuration dite déverrouillée, dans laquelle le plongeur (17), déplacé par une pression générée par le générateur de pression (34) dans une première chambre (35), libère les éléments de verrouillage (25) de manière à déverrouiller la broche de liaison (4) et à libérer les deux pièces (2, 3) de l'effort prédéterminé exercé par ladite broche de liaison (4) ; et
- une configuration dite de séparation, dans laquelle le plongeur (17), déplacé par la pression générée par le générateur de pression (34) dans la première chambre (35), ouvre au moins un passage fluidique (43) entre ladite première chambre (35) et une seconde chambre (44) de manière à permettre au fluide dans la première chambre (35) de passer dans la seconde chambre (44) et d'y transférer la pression générée par le générateur de pression (34), la broche de liaison (4) étant apte à être déplacée par ladite pression dans la seconde chambre (44) jusqu'à venir générer un choc sur une butée (42) agencée sur l'une desdites pièces (2, 3) de manière à initier la séparation des deux pièces (2, 3).

2. Dispositif selon la revendication 1,
**caractérisé en ce qu'**il comporte :
- dans la première cavité (6), une gorge (29) apte à recevoir les éléments de verrouillage (25), lesdits éléments de verrouillage (25) étant maintenus dans ladite gorge (29) par une tête (19) du plongeur (17), dans la configuration verrouillée, de manière à verrouiller la broche de liaison (4) longitudinalement dans un premier sens (S1) ; et
- dans la seconde cavité (8), un épaulement (31) apte à recevoir au moins une partie de la broche de liaison (4) en appui, ladite broche de liaison (4) étant maintenue contre ledit épaulement (31), dans la configuration verrouillée, de manière à verrouiller la broche de liaison (4) longitudinalement dans un second sens (S2), opposé au premier sens (S1).

3. Dispositif selon l'une quelconque des revendications 1 et 2,
**caractérisé en ce que** la seconde cavité (8) de la seconde pièce (3) comprend la seconde chambre (44), ladite seconde chambre (44) correspondant à un espace libre ménagé entre une paroi externe de la broche de liaison (4) et une paroi interne de la cavité (8).

4. Dispositif selon l'une quelconque des revendications 1 à 3,
**caractérisé en ce qu'**il comporte au moins une vis de serrage (42) apte à être vissée dans la broche de liaison (4) et à venir en appui sur la seconde pièce (3), dans la configuration verrouillée, de manière à obtenir l'effort prédéterminé plaquant la première pièce (2) et la seconde pièce (3) l'une contre l'autre, le serrage de la vis de serrage (42) permettant de régler ledit effort prédéterminé.

5. Dispositif selon l'une quelconque des revendication 1 à 3,
**caractérisé en ce qu'**il comporte un écrou (57) configuré pour être vissé sur un filetage (56) d'un prolongement (55) de la broche de liaison (4) en étant en appui contre la pièce (3), dans la configuration verrouillée, de manière à obtenir l'effort prédéterminé plaquant la première pièce (2) et la seconde pièce (3) l'une contre l'autre, le serrage de l'écrou (57) permettant de régler ledit effort prédéterminé.

6. Dispositif selon la revendication 2,
**caractérisé en ce que** la gorge (29) comporte une pente (53) et le plongeur (17) comporte une surface inclinée (28), ladite pente (53) et ladite surface inclinée (28) étant configurées de sorte que, dans la configuration verrouillée, le plongeur (17) agit sur les éléments de verrouillage (25), sous l'action d'un effort élastique exercé par l'élément élastique (23), de manière à maintenir lesdits éléments de verrouillage (25) dans la gorge (29) tout en transmettant ledit effort élastique à l'une des deux pièces (2,3), via la surface inclinée (28) et ladite pente (53), de manière à plaquer lesdites pièces (2,3) l'une contre l'autre avec l'effort prédéterminé, les caractéristiques de l'élément élastique (23) permettant de définir ledit effort prédéterminé.

7. Dispositif selon l'une quelconque des revendications 1 à 6,
**caractérisé en ce que** le ou les passages fluidiques (43) entre la première chambre (35) et la seconde chambre (44) sont agencés de sorte que, lors du déplacement du plongeur (17) sous l'effet de la pression générée par le générateur de pression (34), ledit plongeur (17) ouvre lesdits passages fluidiques (43) après qu'il a libéré les éléments de verrouillage (25).

8. Dispositif selon l'une quelconque des revendications 1 à 6,
**caractérisé en ce que** le ou les passages fluidiques (43) entre la première chambre (35) et la seconde chambre (44) sont agencés de sorte que, lors du déplacement du plongeur (17) sous l'effet de la pression générée par le générateur de pression (34), ledit plongeur (17) ouvre lesdits passages fluidiques (43) avant qu'il ait libéré les éléments de verrouillage (25).

9. Dispositif selon l'une quelconque des revendications 1 à 6,
**caractérisé en ce que** le ou les passages fluidiques (43) entre la première chambre (35) et la seconde chambre (44) sont agencés de sorte que, lors du déplacement du plongeur (17) sous l'effet de la pression générée par le générateur de pression (34), ledit plongeur (17) ouvre lesdits passages fluidiques (43) sensiblement en même temps qu'il libère les éléments de verrouillage (25).

10. Dispositif selon l'une quelconque des revendications 1 à 9,
**caractérisé en ce que** les éléments de verrouillage (25) correspondent à des billes (25A) et **en ce que**, dans la configuration verrouillée, le dispositif de liaison (1) est configuré pour obtenir un contact ponctuel entre lesdites billes (25A) et l'une des première et seconde pièces (2,3) apte à verrouiller la broche de liaison (4).

11. Dispositif selon l'une quelconque des revendications 1 à 9,
**caractérisé en ce que** les éléments de verrouillage (25) correspondent à l'un des éléments suivants, des rouleaux ou des tonneaux, et **en ce que**, dans la configuration verrouillée, le dispositif de liaison (1) est configuré pour obtenir un contact linéique entre lesdits éléments de verrouillage (25) et l'une des première et seconde pièces (2,3) apte à verrouiller la broche de liaison (4).

12. Dispositif selon l'une quelconque des revendications 1 à 9,
**caractérisé en ce que** les éléments de verrouillage (25) correspondent à l'un des éléments suivants, des coins ou des clavettes, et **en ce que**, dans la configuration verrouillée, le dispositif de liaison (1) est configuré pour obtenir un contact surfacique entre lesdits éléments de verrouillage (25) et l'une des première et seconde pièces (2,3) apte à verrouiller la broche de liaison (4).

13. Dispositif selon l'une quelconque des revendications 1 à 12,
**caractérisé en ce que** le générateur de pression (34) correspond à l'un des systèmes générateurs de fluide suivants : une cartouche pyrotechnique génératrice de gaz, une cartouche génératrice de fluide, un système pneumatique, un système hydraulique.

14. Dispositif selon l'une quelconque des revendications 1 à 13,
**caractérisé en ce qu'**au moins l'une des première et seconde pièces (2,3) comporte un bouchon (49) mobile configuré pour fermer, dans la configuration de séparation, une embouchure (9, 10) de la première cavité (6) ou de la seconde cavité (8), ledit bouchon (49) comprenant une face (52) pourvue d'une forme aérodynamique apte à épouser une surface externe (40, 41) de la première pièce (2) ou de la seconde pièce (3).

15. Dispositif selon l'une quelconque des revendications 1 à 14,
**caractérisé en ce que**, dans la configuration de séparation, la broche de liaison (4) est entièrement rétractée à l'intérieur de l'une ou l'autre des première et seconde cavités (6,8).

16. Engin volant et/ou spatial comportant au moins deux pièces,
**caractérisé en ce qu'**il comporte au moins un dispositif de liaison selon l'une quelconque des revendications 1 à 15 liant lesdites pièces ensemble.

17. Procédé de séparation de deux pièces liées ensemble à l'aide d'au moins un dispositif de liaison selon l'une quelconque des revendications 1 à 15,
où à partir d'une configuration verrouillée dans laquelle les deux pièces (2, 3) sont solidairement liées ensemble par le dispositif de liaison (1), ledit procédé (P) comprend, pour séparer les deux pièces (2, 3), au moins la suite d'étapes suivantes mises en œuvre successivement :
- une étape de déverrouillage consistant à commander le générateur de pression (34) pour qu'il génère une pression dans la première chambre (35) de manière à déplacer le plongeur (17) afin de libérer les éléments de verrouillage (25) pour déverrouiller la broche de liaison (4) et libérer les deux pièces (2, 3) de l'effort prédéterminé ; et
- une étape de séparation, mise en œuvre après l'étape de déverrouillage, dans laquelle le plongeur (17), déplacé par la pression générée par le générateur de pression (34), ouvre le ou les passages fluidiques (43) entre la première chambre (35) et la seconde chambre (44), de manière à permettre au fluide dans la première chambre (35) de passer dans la seconde chambre (44) et d'y transférer la pression générée par le générateur de pression (34), la broche de liaison (4) étant apte à être déplacée par ladite pression dans la seconde chambre (44) jusqu'à venir générer un choc sur une butée (42) agencée sur l'une des deux pièces (2, 3) pour initier la séparation desdites deux pièces (2, 3).

## Patentansprüche

1. Vorrichtung zum trennbaren Verbinden zweier Werkstücke, wobei die Verbindungsvorrichtung (1) einen Verbindungsstift (4) umfasst, der so konfiguriert ist, dass er zumindest teilweise in einem ersten Hohlraum (6) eines ersten der Werkstücke (2) und in einem zweiten Hohlraum (8) des zweiten der Werkstücks (3) angeordnet werden kann, wobei der Verbindungsstift (4) geeignet ist, um die Werkstücke (2, 3) fest miteinander zu halten und sie voneinander zu trennen,
wobei die Verbindungsvorrichtung (1) einen in dem Verbindungsstift (4) angeordneten beweglichen Kolben (17) und einen Druckerzeuger (34) umfasst, der steuerbar und zur Erzeugung eines Drucks konfiguriert ist, wobei die Verbindungsvorrichtung (1) so konfiguriert ist, dass sie nacheinander die folgenden Konfigurationen einnehmen kann:
- eine sogenannte Verriegelungskonfiguration, in welcher der durch ein elastisches Element (23) gehaltene Kolben (17) auf Verriegelungselemente (25) einwirkt, die den Verbindungsstift (4) zwischen den beiden Werkstücken (2, 3) verriegeln, wobei der Verbindungsstift (4) so konfiguriert ist, dass er eine vorbestimmte Kraft auf die Werkstücke (2, 3) ausübt, indem er sie gegeneinander drückt, wenn er durch die Verriegelungselemente (25) verriegelt ist;
- eine sogenannte entriegelte Konfiguration, worin der Kolben (17), der durch einen vom Druckerzeuger (34) in einer ersten Kammer (35) erzeugten Druck verschoben wird, die Verriegelungselemente (25) freigibt, um den Verbindungsstift (4) zu entriegeln und die beiden Werkstücke (2, 3) von der durch den Verbindungsstift (4) ausgeübten vorbestimmten Kraft freizugeben; und
- eine sogenannte Trennkonfiguration, in welcher der Kolben (17), der durch den vom Druckerzeuger (34) in der ersten Kammer (35) erzeugten Druck verschoben wird, mindestens einen Fluiddurchgang (43) zwischen der ersten Kammer (35) und einer zweiten Kammer (44) öffnet, um es dem Fluid in der ersten Kammer (35) zu ermöglichen, in die zweite Kammer (44) zu strömen und dort den vom Druckerzeuger (34) erzeugten Druck zu übertragen, wobei der Verbindungsstift (4) durch den Druck in der zweiten Kammer (44) so verschoben werden kann, bis er gegen einen an einem der Werkstücke (2, 3) angeordneten Anschlag (42) einen Stoß erzeugt, um so die Trennung der beiden Werkstücke (2, 3) einzuleiten.

2. Vorrichtung nach Anspruch 1,
**dadurch gekennzeichnet, dass** sie umfasst:
- in dem ersten Hohlraum (6), eine Nut (29), die zur Aufnahme der Verriegelungselemente (25) geeignet ist, wobei die Verriegelungselemente (25) in der verriegelten Konfiguration durch einen Kopf (19) des Kolbens (17) in der Nut (29) gehalten werden, um den Verbindungsstift (4) in Längsrichtung in einer ersten Richtung (S1) zu verriegeln; und
- in dem zweiten Hohlraum (8), eine Schulter (31), die zur Aufnahme mindestens eines Werkstücks des Verbindungsstifts (4) in Anlage geeignet ist, wobei der Verbindungsstift (4) in der verriegelten Konfiguration gegen die Schulter (31) gehalten wird, um den Verbindungsstift (4) in Längsrichtung in einer zweiten Richtung (S2) zu verriegeln, die der ersten Richtung (S1) entgegengesetzt ist.

3. Vorrichtung nach einem der Ansprüche 1 und 2,
**dadurch gekennzeichnet, dass** der zweite Hohlraum (8) des zweiten Werkstücks (3) die zweite Kammer (44) umfasst, wobei die zweite Kammer (44) einem Freiraum entspricht, der zwischen einer Außenwand des Verbindungsstifts (4) und einer Innenwand des Hohlraums (8) eingerichtet ist.

4. Vorrichtung nach einem der Ansprüche 1 bis 3,
**dadurch gekennzeichnet, dass** sie mindestens eine Klemmschraube (42) umfasst, die in den Verbindungsstift (4) eingeschraubt werden und in der verriegelten Konfiguration am zweiten Werkstück (3) zur Anlage kommen kann, so dass die vorbestimmte Kraft erhalten wird, die das erste Werkstück (2) und das zweite Werkstück (3) gegeneinander drückt, wobei das Festklemmen der Klemmschraube (42) die Regelung der vorbestimmten Kraft ermöglicht.

5. Vorrichtung nach einem der Ansprüche 1 bis 3,
**dadurch gekennzeichnet, dass** sie eine Mutter (57) umfasst, die so konfiguriert ist, dass sie auf ein Gewinde (56) einer Verlängerung (55) des Verbindungsstifts (4) aufgeschraubt wird, indem sie gegen das Werkstück (3) anliegt, so dass in der verriegelten Konfiguration, die vorbestimmte Kraft erhalten wird, die das erste Werkstück (2) und das zweite Werkstück (3) gegeneinander drückt, wobei das Festziehen der Mutter (57) die Regelung der vorbestimmten Kraft ermöglicht.

6. Vorrichtung nach Anspruch 2,
**dadurch gekennzeichnet, dass** die Nut (29) eine Schräge (53) aufweist und der Kolben (17) eine geneigte Fläche (28) aufweist, wobei die Schräge (53) und die geneigte Fläche (28) so konfiguriert sind, dass der Kolben (17) in der verriegelten Konfiguration auf die Verriegelungselemente (25) einwirkt, unter der Wirkung einer vom elastischen Element (23) ausgeübten elastischen Kraft, um die Verriegelungselemente (25) in der Nut (29) zu halten und gleichzeitig die elastische Kraft über die geneigte Fläche (28) und die Schräge (53) auf eines der beiden Werkstücke (2, 3) zu übertragen, so dass die Werkstücke (2, 3) mit der vorbestimmten Kraft gegeneinander gedrückt werden, wobei die Eigenschaften des elastischen Elements (23) die Festlegung dieser vorbestimmten Kraft ermöglichen.

7. Vorrichtung nach einem der Ansprüche 1 bis 6,
**dadurch gekennzeichnet, dass** der oder die Fluiddurchgänge (43) zwischen der ersten Kammer (35) und der zweiten Kammer (44) so angeordnet sind, dass bei der Bewegung des Kolbens (17) unter der Wirkung des vom Druckerzeuger (34) erzeugten Drucks der Kolben (17) die Fluiddurchgänge (43) öffnet, nachdem er die Verriegelungselemente (25) freigegeben hat.

8. Vorrichtung nach einem der Ansprüche 1 bis 6,
**dadurch gekennzeichnet, dass** der oder die Fluiddurchgänge (43) zwischen der ersten Kammer (35) und der zweiten Kammer (44) so angeordnet sind, dass bei der Bewegung des Kolbens (17) unter der Wirkung des vom Druckerzeuger (34) erzeugten Drucks der Kolben (17) die Fluiddurchgänge (43) öffnet, bevor er die Verriegelungselemente (25) freigegeben hat.

9. Vorrichtung nach einem der Ansprüche 1 bis 6,
**dadurch gekennzeichnet, dass** der oder die Fluiddurchgänge (43) zwischen der ersten Kammer (35) und der zweiten Kammer (44) so angeordnet sind, dass bei der Bewegung des Kolbens (17) unter der Wirkung des vom Druckerzeuger (34) erzeugten Drucks der Kolben (17) die Fluiddurchgänge (43) im Wesentlichen gleichzeitig mit dem Freigeben der Verriegelungselemente (25) öffnet.

10. Vorrichtung nach einem der Ansprüche 1 bis 9,
**dadurch gekennzeichnet, dass** die Verriegelungselemente (25) Kugeln (25A) entsprechen und dass die Verbindungsvorrichtung (1) in der verriegelten Konfiguration konfiguriert ist, um einen Punktkontakt zwischen den Kugeln (25A) und einem von dem ersten und dem zweiten Werkstück (2, 3) herzustellen, das geeignet ist, den Verbindungsstift (4) zu verriegeln.

11. Vorrichtung nach einem der Ansprüche 1 bis 9,
**dadurch gekennzeichnet, dass** die Verriegelungselemente (25) einem der folgenden Elemente entsprechen, Rollen oder Zylindern, und dass in der verriegelten Konfiguration die Verbindungsvorrichtung (1) konfiguriert ist, um einen linearen Kontakt zwischen den Verriegelungselementen (25) und einem von dem ersten und dem zweiten Werkstück (2, 3) herzustellen, das geeignet ist, den Verbindungsstift (4) zu verriegeln.

12. Vorrichtung nach einem der Ansprüche 1 bis 9,
**dadurch gekennzeichnet, dass** die Verriegelungselemente (25) einem der folgenden Elemente entsprechen, Ecken oder Keile, und dass in der verriegelten Konfiguration die Verbindungsvorrichtung (1) konfiguriert ist, um einen Flächenkontakt zwischen den Verriegelungselementen (25) und einem von dem ersten und dem zweiten Werkstück (2, 3) herzustellen, das geeignet ist, den Verbindungsstift (4) zu verriegeln.

13. Vorrichtung nach einem der Ansprüche 1 bis 12,
**dadurch gekennzeichnet, dass** der Druckerzeuger (34) einem der folgenden Fluiderzeugungssysteme entspricht: einer pyrotechnischen Gaserzeugungskartusche, einer Fluiderzeugungskartusche, einem pneumatischen System, einem hydraulischen System.

14. Vorrichtung nach einem der Ansprüche 1 bis 13,
**dadurch gekennzeichnet, dass** mindestens eines von dem ersten und dem zweiten Werkstück (2, 3) einen beweglichen Stopfen (49) umfasst, der konfiguriert ist, um in der Trennkonfiguration eine Öffnung (9, 10) des ersten Hohlraums (6) oder des zweiten Hohlraums (8) zu verschließen, wobei der Stopfen (49) eine Seite (52) mit einer aerodynamischen Form umfasst, die sich an eine Außenfläche (40, 41) des ersten Werkstücks (2) oder des zweiten Werkstücks (3) anpassen kann.

15. Vorrichtung nach einem der Ansprüche 1 bis 14,
**dadurch gekennzeichnet, dass** in der Trennkonfiguration der Verbindungsstift (4) vollständig ins Innere des ersten oder des zweiten Hohlraums (6, 8) zurückgezogen ist.

16. Fluggerät und/oder Raumfahrzeug, das mindestens zwei Werkstücke umfasst,
**dadurch gekennzeichnet, dass** es mindestens eine Verbindungsvorrichtung nach einem der Ansprüche 1 bis 15 umfasst, die die Werkstücke miteinander verbindet.

17. Verfahren zum Trennen von zwei Werkstücken, die mittels mindestens einer Verbindungsvorrichtung nach einem der Ansprüche 1 bis 15 miteinander verbunden sind,
wobei ausgehend von einer verriegelten Konfiguration, in der die beiden Werkstücke (2, 3) durch die Verbindungsvorrichtung (1) fest miteinander verbunden sind, das Verfahren (P) zum Trennen der beiden Werkstücke (2, 3) mindestens die folgenden, nacheinander durchgeführten Schritte umfasst:
- einen Entriegelungsschritt, der darin besteht, den Druckerzeuger (34) so anzusteuern, dass er in der ersten Kammer (35) einen Druck erzeugt, um den Kolben (17) zu bewegen, um die Verriegelungselemente (25) freizugeben, um den Verbindungsstift (4) zu entriegeln und die beiden Werkstücke (2, 3) von der vorbestimmten Kraft freizugeben; und
- einen Trennschritt, der nach dem Entriegelungsschritt durchgeführt wird, wobei der Kolben (17), der durch den vom Druckerzeuger (34) erzeugten Druck bewegt wird, den oder die Fluiddurchgänge (43) zwischen der ersten Kammer (35) und der zweiten Kammer (44) öffnet, sodass das Fluid in der ersten Kammer (35) in die zweite Kammer (44) strömen und den vom Druckerzeuger (34) erzeugten Druck dorthin übertragen kann, wobei der Verbindungsstift (4) durch den Druck in der zweiten Kammer (44) so bewegt werden kann, bis er gegen einen an einem der Werkstücke (2, 3) angeordneten Anschlag (42) einen Stoß erzeugt, um die Trennung der beiden Werkstücke (2, 3) einzuleiten.

## Claims

1. A separable connection device for the separable connection of two parts, said connection device (1) comprising a connecting pin (4) configured so as to be able to be arranged, at least partially, in a first cavity (6) of a first of said parts (2) and in a second cavity (8) of the second of said parts (3), said connecting pin (4) being able to hold said parts (2, 3) securely together and to separate them, wherein the connection device (1) comprises a movable plunger (17) arranged in the connecting pin (4) and a pressure generator (34) able to be controlled and configured to generate a pressure, said connection device (1) being configured to be able to assume the following configurations in succession:
- a so-called locked configuration, wherein the plunger (17), held by an elastic element (23), acts on locking elements (25) which lock the connecting pin (4) between the two parts (2, 3), said connecting pin (4) being configured to exert a predetermined force on said parts (2, 3) by pressing them against each other when it is locked by the locking elements (25);
- a so-called unlocked configuration, wherein the plunger (17), moved by a pressure generated by the pressure generator (34) in a first chamber (35), releases the locking elements (25) so as to unlock the connecting pin (4) and release the two parts (2, 3) from the predetermined force exerted by said connecting pin (4); and
- a so-called separation configuration, wherein the plunger (17), moved by the pressure generated by the pressure generator (34) in the first chamber (35), opens at least one fluid passage (43) between said first chamber (35) and a second chamber (44) so as to allow the fluid in the first chamber (35) to pass into the second chamber (44) and transfer there the pressure generated by the pressure generator (34), the connecting pin (4) being able to be moved by said pressure in the second chamber (44) until generating an impact on an abutment (42) arranged on one of said parts (2, 3) so as to initiate the separation of the two parts (2, 3).

2. The device according to claim 1,
**characterized in that** it comprises:
- in the first cavity (6), a groove (29) able to receive the locking elements (25), said locking elements (25) being held in said groove (29) by a head (19) of the plunger (17), in the locked configuration, so as to lock the connecting pin (4) longitudinally in a first direction (S1); and
- in the second cavity (8), a shoulder (31) able to receive at least a portion of the connecting pin (4) in abutment, said connecting pin (4) being held against said shoulder (31), in the locked configuration, so as to lock the connecting pin (4) longitudinally in a second direction (S2), opposite to the first direction (S1).

3. The device according to any one of claims 1 and 2,
**characterized in that** the second cavity (8) of the second part (3) comprises the second chamber (44), said second chamber (44) corresponding to a free space formed between an outer wall of the connecting pin (4) and an inner wall of the cavity (8).

4. The device according to any one of claims 1 to 3,
**characterized in that** it comprises at least one tightening screw (42) able to be screwed into the connecting pin (4) and to bear on the second part (3), in the locked configuration, so as to obtain the predetermined force pressing the first part (2) and the second part (3) against each other, the tightening of the tightening screw (42) allowing to adjust said predetermined force.

5. The device according to any one of claims 1 to 3,
**characterized in that** it comprises a nut (57) configured to be screwed onto a thread (56) of an extension (55) of the connecting pin (4) while bearing against the part (3), in the locked configuration, so as to obtain the predetermined force pressing the first part (2) and the second part (3) against each other, the tightening of the nut (57) allowing to adjust said predetermined force.

6. The device according to claim 2,
**characterized in that** the groove (29) comprises a slope (53) and the plunger (17) comprises an inclined surface (28), said slope (53) and said inclined surface (28) being configured so that, in the locked configuration, the plunger (17) acts on the locking elements (25), under the action of an elastic force exerted by the elastic element (23), so as to hold said locking elements (25) in the groove (29) while transmitting said elastic force to one of the two parts (2, 3), via the inclined surface (28) and said slope (53), so as to press said parts (2, 3) against each other with the predetermined force, the characteristics of the elastic element (23) allowing to define said predetermined force.

7. The device according to any one of claims 1 to 6,
**characterized in that** the fluid passage or passages (43) between the first chamber (35) and the second chamber (44) are arranged so that, when the plunger (17) is moved under the effect of the pressure generated by the pressure generator (34), said plunger (17) opens said fluid passages (43) after it has released the locking elements (25).

8. The device according to any one of claims 1 to 6,
**characterized in that** the fluid passage or passages (43) between the first chamber (35) and the second chamber (44) are arranged so that, when the plunger (17) is moved under the effect of the pressure generated by the pressure generator (34), said plunger (17) opens said fluid passages (43) before it has released the locking elements (25).

9. The device according to any one of claims 1 to 6,
**characterized in that** the fluid passage or passages (43) between the first chamber (35) and the second chamber (44) are arranged so that, when the plunger (17) is moved under the effect of the pressure generated by the pressure generator (34), said plunger (17) opens said fluid passages (43) substantially at the same time as it releases the locking elements (25).

10. The device according to any one of claims 1 to 9,
**characterized in that** the locking elements (25) correspond to balls (25A) and **in that**, in the locked configuration, the connection device (1) is configured to obtain a point contact between said balls (25A) and one of the first and second parts (2, 3) able to lock the connecting pin (4).

11. The device according to any one of claims 1 to 9,
**characterized in that** the locking elements (25) correspond to one of the following elements, rollers or barrels, and **in that**, in the locked configuration, the connection device (1) is configured to obtain a linear contact between said locking elements (25) and one of the first and second parts (2, 3) able to lock the connecting pin (4).

12. The device according to any one of claims 1 to 9,
**characterized in that** the locking elements (25) correspond to one of the following elements, wedges or keys, and **in that**, in the locked configuration, the connection device (1) is configured to obtain a surface contact between said locking elements (25) and one of the first and second parts (2, 3) able to lock the connecting pin (4).

13. The device according to any one of claims 1 to 12,
**characterized in that** the pressure generator (34) corresponds to one of the following fluid-generating systems: a pyrotechnic gas-generating cartridge, a fluid-generating cartridge, a pneumatic system, a hydraulic system.

14. The device according to any one of claims 1 to 13,
**characterized in that** at least one of the first and second parts (2, 3) comprises a movable cap (49) configured to close, in the separation configuration, a mouth (9, 10) of the first cavity (6) or of the second cavity (8), said cap (49) comprising a face (52) provided with an aerodynamic shape able to match an external surface (40, 41) of the first part (2) or of the second part (3).

15. The device according to any one of claims 1 to 14,
**characterized in that**, in the separation configuration, the connecting pin (4) is fully retracted within either the first or second cavities (6,8).

16. A flying craft and/or spacecraft comprising at least two parts,
**characterized in that** it comprises at least one connection device according to any one of claims 1 to 15 for connecting said parts together.

17. A method for separating two parts connected together by means of at least one connection device according to any one of claims 1 to 15,
wherein, starting from a locked configuration wherein the two parts (2, 3) are securely connected together by the connection device (1), said method (P) comprises, in order to separate the two parts (2, 3), at least the following sequence of steps implemented successively:
- an unlocking step consisting of controlling the pressure generator (34) to generate a pressure in the first chamber (35) so as to move the plunger (17) in order to release the locking elements (25) to unlock the connecting pin (4) and release the two parts (2, 3) from the predetermined force; and
- a separation step, implemented after the unlocking step, wherein the plunger (17), moved by the pressure generated by the pressure generator (34), opens the fluid passage or passages (43) between the first chamber (35) and the second chamber (44), so as to allow the fluid in the first chamber (35) to pass into the second chamber (44) and transfer there the pressure generated by the pressure generator (34), the connecting pin (4) being able to be moved by said pressure inside the second chamber (44) until it generates an impact on an abutment (42) arranged on one of the two parts (2, 3) to initiate the separation of said two parts (2, 3).
